# EUROPEAN PATENT APPLICATION

(11) **EP 4 534 163 A1**
(43) Date of publication of application: **09.04.2025**
(21) Application number: 24742437.7
(22) Date of filing: 21.06.2024
(51) Int. Cl.: A63F 13/42, A63F 13/63, A63F 13/533, A63F 13/24

(54) **GAME INTERFACE DEVICE AND METHOD**

(30) Priority: 22.08.2023 KR 20230109916
(71) Applicant: Samsung Electronics Co., Ltd., Suwon-si, Gyeonggi-do 16677 (KR)
(72) Inventor: JUNG, Jingun, Suwon-si, Gyeonggi-do 16677 (KR); KANG, Donghun, Suwon-si, Gyeonggi-do 16677 (KR); OH, Seungbin, Suwon-si, Gyeonggi-do 16677 (KR); LEE, Sangyoon, Suwon-si, Gyeonggi-do 16677 (KR); LEE, Youngah, Suwon-si, Gyeonggi-do 16677 (KR)
(74) Representative: Appleyard Lees IP LLP
(86) International application number: PCT/KR2024/008603
(87) International publication number: WO 2025/042006

(57) **Abstract**

Disclosed is a game interface device and method for providing a game interface screen for controlling a game in a game system. The game interface device may determine a function identifier to be mapped to each of function buttons to be included in a game interface screen. The game interface device may include output a game interface screen using first mapping information including information regarding a function identifier determined to be mapped for each function button, and a button identifier for identifying function buttons.

## Description

### [Technical Field]

This disclosure relates to a game interface device and method for providing a game interface screen for controlling a game in a game system.

### [Background Art]

To play games on electronic devices, such as smartphones or computers, game controllers play an important role. The game controllers may be classified in various ways depending on how to provide a user interface. The game controller may be provided not only as an input device for various purposes, such as a keyboard or a mouse, but also as a gamepad specified for gaming purposes.

The gamepad may include a plurality of buttons and a manipulation lever. The buttons or manipulation lever, included in the gamepad, may be mapped or assigned with functions that may be used in gaming. Therefore, as more and more functions are used in playing games, the game player may have difficulty in becoming familiar with the functionality on the gamepad and may lose interest in the game. Further, the functionality of the buttons on a gamepad can differ by game, which can increase the barrier to entry for game players to try unfamiliar games.

### [Disclosure of Disclosure]

### [Solution to Problems]

A method for playing a game on an electronic device, according to an embodiment of the disclosure, comprises determining a function identifier to be mapped (or assigned) to function buttons included in a game interface screen of an input device. The method comprises transmitting, to the input device, first mapping information including a button identifier for identifying the function buttons and information regarding the function identifier to be mapped to the function buttons.

An electronic device, according to an embodiment of the disclosure, comprises a display displaying a game screen. The electronic device comprises a transceiver for communicating (e.g., transmitting and/or receiving) with an input device based on a specific communication scheme. The electronic device comprises memory storing instructions for playing a game. The electronic device comprises at least one processor including a processing circuit electrically connected with the display, the transceiver, and the memory to perform control for playing the game.

As an example, the instructions, when executed, may enable the at least one processor to individually and/or collectively determine function identifiers to be mapped to function buttons included in a game interface screen of the input device. As an example, the instructions, when executed, may enable the at least one processor to individually and/or collectively transmit first mapping information, which include a mapping relationship between the function buttons and the function identifiers, to the input device 120 through the transceiver.

As an example, the first mapping information may include a button identifier for identifying the function buttons and information regarding a button the function identifier to be mapped to each of the function buttons.

A method for providing a game interface in an input device, according to an embodiment of the disclosure, comprises receiving, from an electronic device, first mapping information which include a mapping relationship between function buttons and function information. The method comprises a button identifier for identifying the function buttons and the function information to be mapped for each of the function buttons, from the first mapping information. The method comprises displaying identification information about a function mapped corresponding to the function buttons included in a game interface screen using the button identifier and the function information.

An input device, according to an embodiment of the disclosure, comprises a display displaying a game interface screen. The input device comprises a touch panel detecting a touch input for a touch interaction. The input device comprises a transceiver communicating with an electronic device based on a specific communication scheme. The input device comprises memory storing instructions for playing a game. The input device comprises at least one processor including a processing circuit electrically connected with the display, the touch panel, the transceiver, and the memory to perform control for playing the game.

As an example, the instructions, when executed, may enable the at least one processor to individually and/or collectively receive, from the electronic device, first mapping information which include a mapping relationship between the function buttons and function information, through the transceiver. As an example, the instructions, when executed, may enable the at least one processor to individually and/or collectively obtain a button identifier for identifying the function buttons and the function information determined to be mapped for each of the function buttons, from the first mapping information. As an example, the instructions, when executed, may enable the at least one processor to individually and/or collectively display identification information related to a target function mapped corresponding to the function buttons included in the game interface screen using the function information and the button identifier.

### [Brief Description of Drawings]

FIG. 1 is a view illustrating an example game system according to one or more embodiments;
FIG. 2 illustrates an example signal processing procedure for providing a game interface for controlling game play in a game system according to one or more embodiments;
FIG. 3 is a flowchart illustrating control performed to provide a user interface in a game play device according to one or more embodiments;
FIG. 4 is a flowchart illustrating control performed to provide a user interface in a game controller according to one or more embodiments;
FIG. 5 is a block diagram illustrating an example configuration of a game play device according to one or more embodiments;
FIG. 6 is a block diagram illustrating an example configuration of game controller according to one or more embodiments; and
FIGS. 7A, 7B, 7C, 7D, 7E, and 7F are views illustrating examples of a game interface screen of an input device in a game system according to one or more embodiments.

The same or similar reference denotations may be used to refer to the same or similar elements throughout the specification and the drawings.

### [Mode for the Invention]

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

According to various embodiments of the disclosure, there may be provided an electronic device and method for mapping a game control function for each button included in a user interface (UI) by analyzing a state of a game in play or in progress (e.g., game state).

According to various embodiments of the disclosure, there may be provided an electronic device and method for configuring or updating a layout of a game interface screen to be displayed on a display, with a state of a game in play reflected therein, according to various embodiments.

According to various embodiments of the disclosure, there may be provided an electronic device and an operation method thereof, which transmit mapping information regarding functions to be allocated for buttons included in a game interface screen to an input device configured to display the game interface screen, by real-time analyzing a game screen.

According to various embodiments of the disclosure, there may be provided an input device and an operation method thereof, which real-time update functions to be mapped to buttons included in a game interface screen based on mapping information received from an electronic device.

According to an embodiment of the disclosure, the game player may be allowed to visually identify the function mapped for each button through a game interface screen of an input device and may thus experience a game without disconnection even in a game interface environment unfamiliar to the game player.

The technical objects of the disclosure are not limited to the foregoing, and other technical objects may be derived by one of ordinary skill in the art from example embodiments of the disclosure.

Effects of the disclosure are not limited to the foregoing, and other unmentioned effects would be apparent to one of ordinary skill in the art from the following description. In other words, unintended effects in practicing embodiments of the disclosure may also be derived by one of ordinary skill in the art from example embodiments of the disclosure.

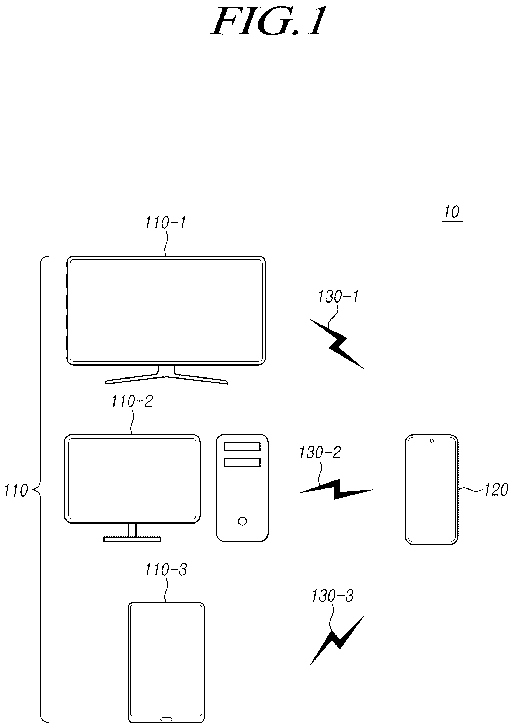

FIG. 1 is a view illustrating an example game system 10 according to one or more embodiments.

Referring to FIG. 1, a game system 10 includes at least two electronic devices (110 and 120). The game system 10 may optionally include a server and/or a game device. The at least two electronic devices (110 and 120) are operable to interwork to support a user (e.g., a game player) to play a game. The at least two electronic devices (110 and 120) are operable to establish communication links (130-1, 130-2, and 130-3) based on a specific communication protocol. The at least two electronic devices (110 and 120) may exchange data, information, or signals through the communication links (130-1, 130-2, and 130-3). The at least two electronic devices 110 and 120 are operable to exchange data, information, or signals to control the game being played. The specific communication protocol may be a wired communication protocol or a wireless communication protocol. The wired communication protocol may be, e.g., a protocol provided to support wired communication through a physical passage by a data cable (e.g., a digital diagnostic monitoring interface (DDMI) cable or a C-type cable). The wireless communication protocol may be a protocol provided to support short-range wireless communication such as Bluetooth, wireless fidelity (Wi-Fi) direct, or infrared data association (IrDA).

The game system 10 includes at least one electronic device 110 (hereinafter, referred to as a "first electronic device 110") through (or on) which a game is played (or executed) and/or a game screen is provided. In the following description, the first electronic device 110 may be referred to as an 'electronic device' or a 'game play device.' The game play device may be a term defined based on a function(s) provided. The first electronic device 110 may be connected to an input device through communication links (130-1, 130-2, and 130-3) based on a specific communication protocol.

The first electronic device 110 includes a display having a specific size. The first electronic device 110 is operable to output a game screen as (or while) the game is played through (or on) the display. The first electronic device 110 may be, e.g., one of a television 110-1, a computer 110-2, or a tablet 110-3. Although not illustrated, the first electronic device 110 may be a wearable device, such as a head mounted display.

The first electronic device 110 is operable to perform an operation for playing (or related to executing) a game based on at least one platform. For example, the first electronic device 110 operates based on an online platform where it may access a game server through a network to play game. The game, which may be played as it accesses the game server, may include, e.g., at least one of a cloud game, a cross-platform game, or an online mode game (e.g., a console or personal computer (PC) game in which network or server connection is established). For example, the first electronic device 110 may operate based on an offline platform where the game may be played (or executed) without accessing the game server. The game, that may be played (or executed) without the network connection to the game server, may include a game executed on a separate game device (e.g., a game console or local hardware such as a PC hard drive) or an offline mode game (e.g., a console or PC game in which network or server connection is not configured).

The first electronic device 110 may include an input device for controlling a game or may connect to an external input device (e.g., the second electronic device 120). The first electronic device 110 is operable to receive an instruction or a command instructing execution of a game from the input device. The first electronic device 110 is operable to execute a target game in response to the instruction or command. The procedure for executing the target game may be determined according to the platform on which the target game is based. The first electronic device 110 is operable to output a game screen according to execution of the target game through the display. The first electronic device 110 is operable to play the game based on the input signal of the input device according to the user's manipulation (e.g., control) while the game is being played. The first electronic device 110 is operable to output a game screen, reflecting or displaying a game state of a game being played, through (or on) the display.

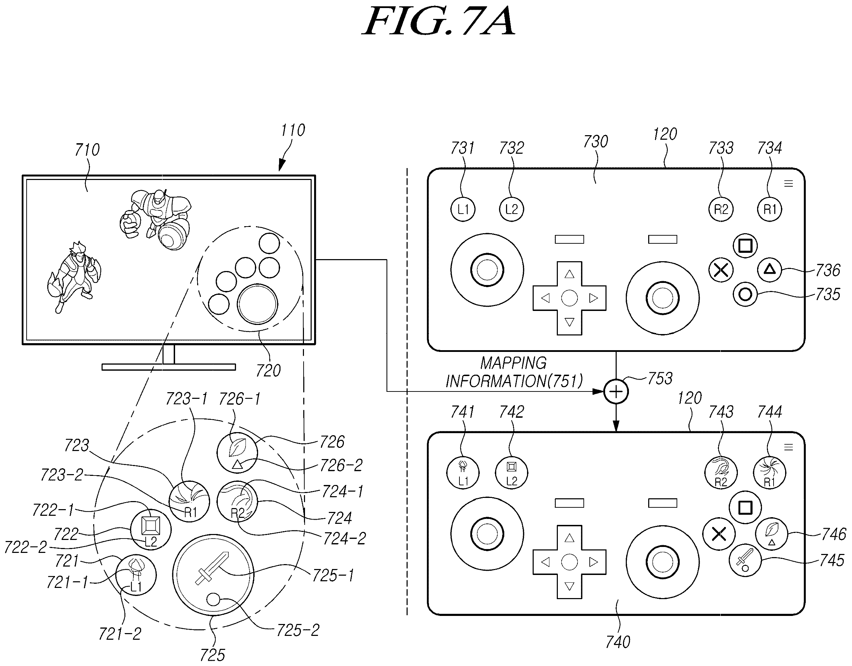

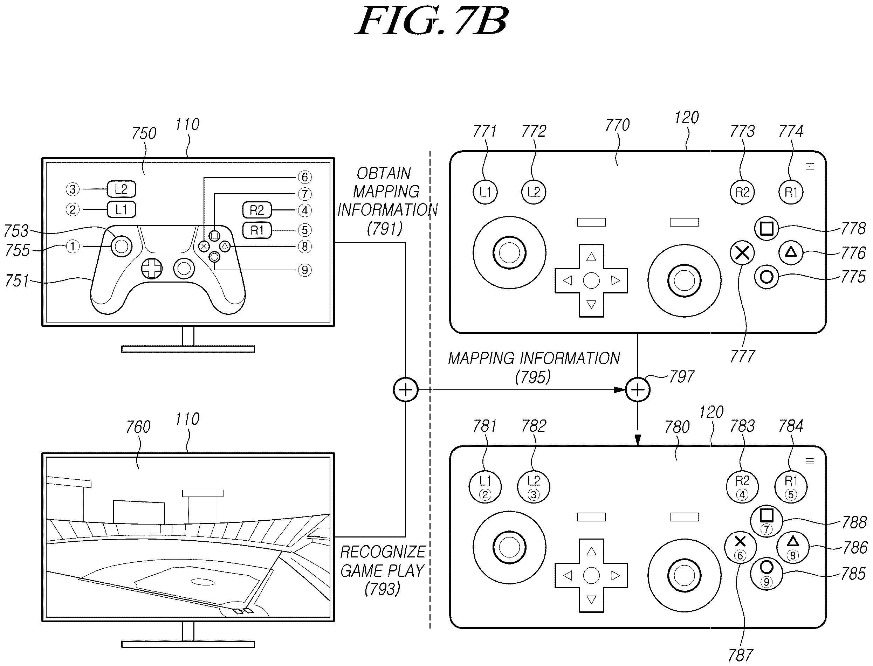

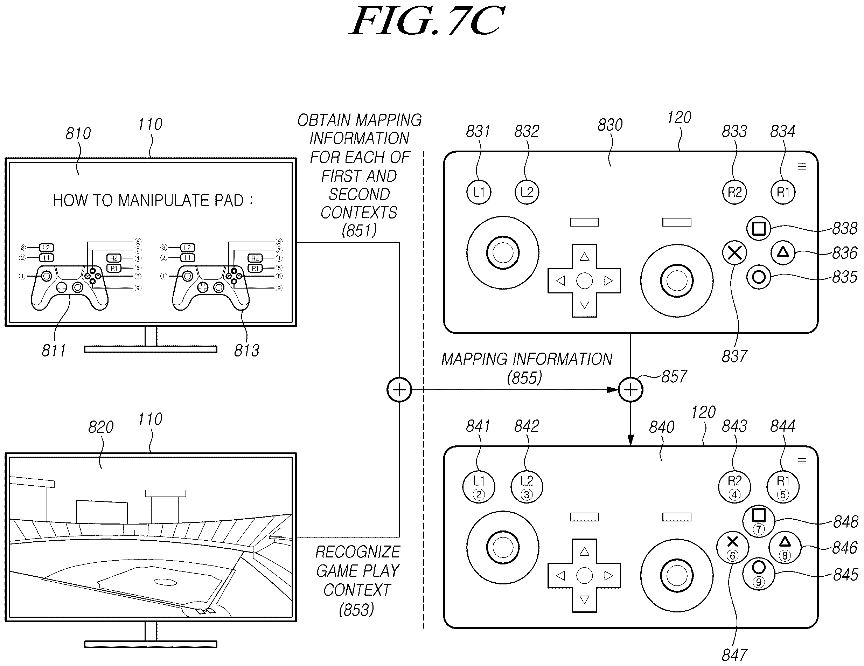

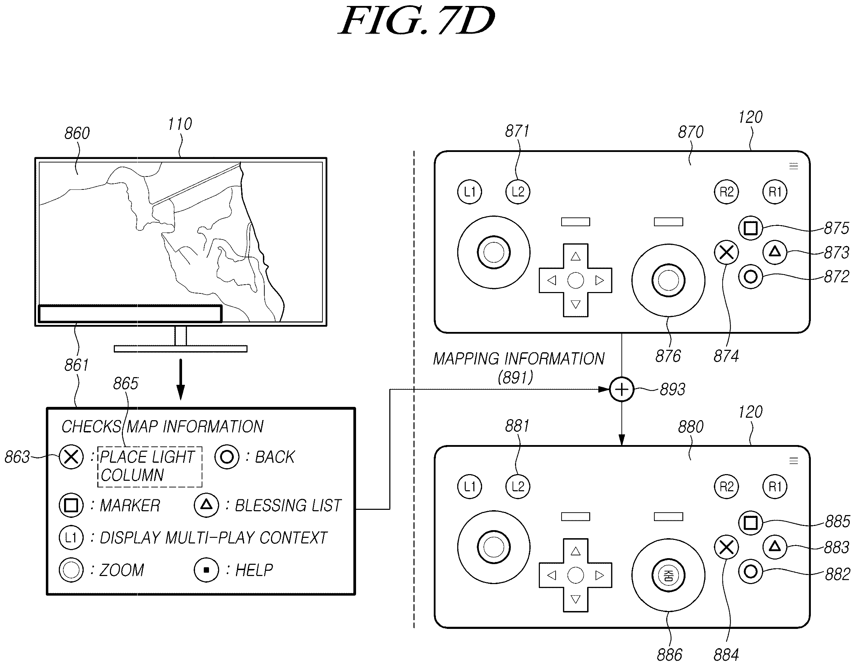

The first electronic device 110 is operable to transmit mapping information for configuring a game interface screen to the second electronic device 120 (see FIG. 7A, 7B, 7C, or 7D). The game interface screen may be a UI screen output (e.g., displayed) through the display of the second electronic device 120 to allow the user to control (e.g., play) the game using a touch interaction (e.g., touch functions). The game interface screen may be different for each game. The game interface screen may include a plurality of function buttons for touch interaction with the user. Each of the function buttons may be mapped (or assigned) to one or more functions supported by the game. The mapping information may include information related to functions that are mapped to each of the function buttons included in (or displayed on) the game interface screen. The first electronic device 110 is operable to transmit the mapping information when the connection with the second electronic device 120 is established (see FIG. 7A). The first electronic device 110 is operable to transmit the mapping information to the second electronic device 120 when the game is played (see FIG. 7B). If a game state (e.g., an attack mode or a defend mode in a soccer game) of a game being played changes, the first electronic device 110 is operable to transmit mapping information reflecting the changed game state to the second electronic device 120 (see FIG. 7C). If the game screen is changed to a screen displaying additional information (e.g., map information or game configuration information), the first electronic device 120 is operable to transmit mapping information reflecting the changed screen to the second electronic device 120 (see FIG. 7D).

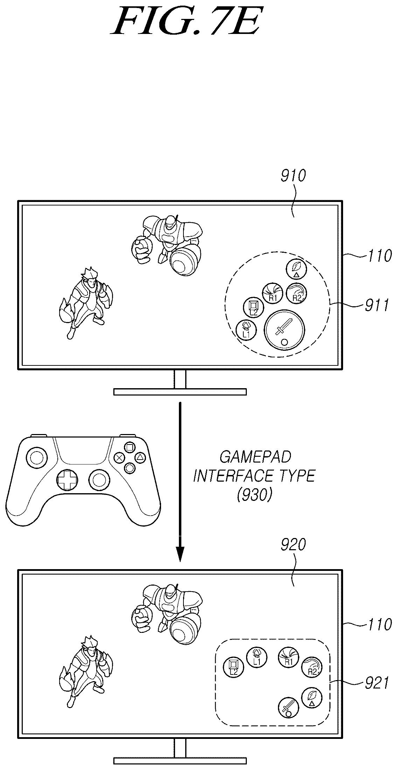

The first electronic device 110 is operable to change a layout corresponding to arrangement of function-related identifiers (e.g., button identifiers or function identifiers) displayed on the game screen in response to a user request (see FIG. 7E). The layout may be changed to reflect, e.g., the arrangement of identifiers on the game interface screen that the second electronic device 120 outputs through the display. In this case, the arrangement of the identifiers displayed on the game screen, according to the changed layout of the first electronic device 110, may be substantially the same as the arrangement of the identifiers displayed on the game interface screen being output by the second electronic device 120.

The first electronic device 110 is operable to change the game screen in response to the user's request.

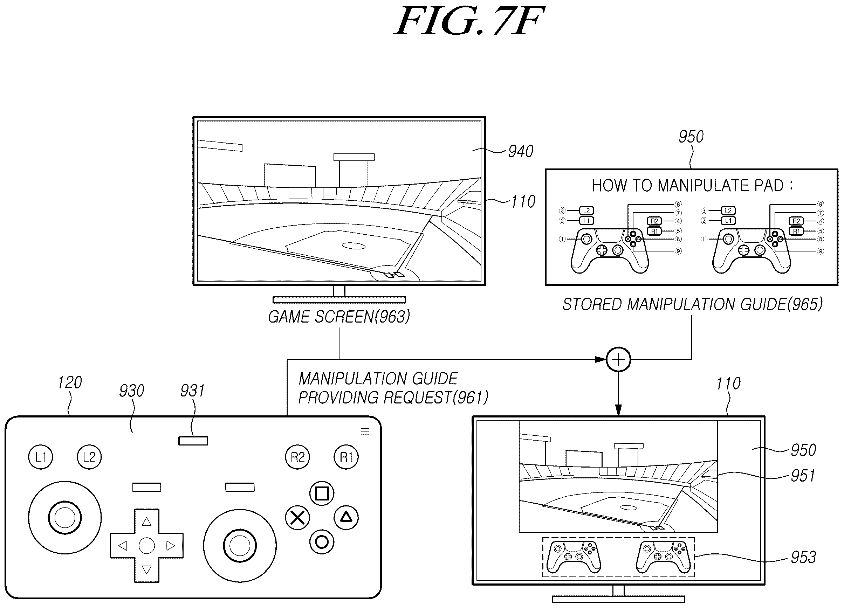

For example, if the user requests the output of the manipulation guide in a game state in which the game screen is being output, the first electronic device 110 is operable to output a multi-view screen, including the game screen and the screen displaying the manipulation guide, through (or on) the display (see FIG. 7F). To that end, the first electronic device 110 is operable to decrease the display area of the game screen on the display from the entire area to a partial area. The first electronic device 110 is operable to output the screen for displaying the manipulation guide in an area acquired by decreasing the display area which is used to display the game screen. The screen displaying the manipulation guide may be a virtual game pad screen including function information corresponding to each of the function buttons to be used to play the corresponding game. For example, if the user requests to terminate the output of the manipulation guide in a game state where the multi-view screen is being output, the first electronic device 110 is operable to stop the output of the multi-view screen and may increase or expand the display area of the game screen to the entire area of the display.

The game system 10 includes an input device 120 (hereinafter, referred to as a "second electronic device 120") as a controller for controlling game play. The second electronic device 120 is operable to establish communication links (130-1, 130-2, and 130-3) with the first electronic device 110, which is a gameplay device, based on a specific communication protocol. In the following description, the second electronic device 120 may be referred to as an 'input device' or a 'game controller.' 'Game controller' may be a term defined considering a function provided.

The second electronic device 120 is operable to serve as a UI capable of controlling a game based on a touch interaction. The UI may be referred to as a 'game interface' considering that the UI is an interface for controlling a game. In the following description, 'user interface," 'UI,' or 'game interface' may be substantially the same or may be used in a similar technical sense. The game interface may be an application program that may be mounted on the second electronic device 120 and executed. The second electronic device 120 is operable to execute a corresponding application program according to a request for activating the game interface function. In response to the execution of the corresponding application program, the second electronic device 120 is operable to output a game interface screen through a display. The second electronic device 120 is operable to perform a touch interaction with the user for controlling a game through the game interface screen. The second electronic device 120 is operable to obtain the user's instruction or command through the touch interaction. The second electronic device 120 may transmit the obtained instruction or command to the first electronic device 110. The instruction or command transmitted to the first electronic device 110 may be reflected in playing the corresponding game.

The second electronic device 120 is operable to provide a game interface screen for controlling game play. The game interface screen may be provided by modeling, e.g., a game pad. The game interface screen may be different for each game. The game interface screen may include a plurality of function buttons for touch interaction with the user. Each of the function buttons is mapped to one or more functions supported by the game. As an example, the second electronic device 120 is operable to receive mapping information from the first electronic device 110 (see FIG. 7A, FIG. 7B, FIG. 7C, or FIG. 7D). The mapping information includes information related to functions mapped (or assigned) to each of the function buttons included in the game interface screen. The second electronic device 120 is operable to receive the mapping information when the connection with the first electronic device 110 is established (see FIG. 7A). The second electronic device 120 is operable to receive the mapping information when the game is played on the first electronic device 110 (see FIG. 7B). If a game state (e.g., an attack mode or a defend mode in a soccer game) of a game being played on the first electronic device 110 changes, the second electronic device 120 is operable to receive mapping information reflecting the game state (see FIG. 7C). If the game screen of the first electronic device 110 is changed to a screen displaying additional information (e.g., map information or game configuration information), the second electronic device 120 is operable to receive mapping information reflecting the changed screen (see FIG. 7D).

The second electronic device 120 may separately store mapping information used to output a game interface screen for each game. In this case, if the same event occurs, the second electronic device 120 is operable to access the stored mapping information and output a corresponding game interface screen.

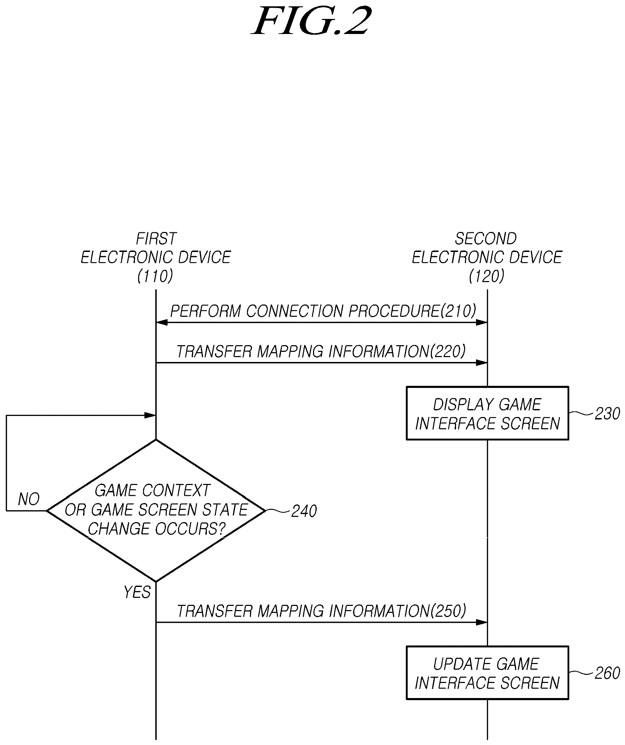

FIG. 2 illustrates an example signal processing procedure for providing a game interface for controlling game play in a game system (e.g., the game system 10 of FIG. 1) according to one or more embodiments.

Referring to FIG. 2, the game system 10 includes a first electronic device (e.g., the first electronic device 110 of FIG. 1) that provides a game play and/or a game screen or a second electronic device (e.g., the second electronic device 120 of FIG. 1) that provides a game interface for controlling the game play.

The first electronic device 110 is operable to perform a connection procedure with the second electronic device 120 (operation 210). The connection procedure may be determined by a communication protocol connecting the first electronic device 110 and the second electronic device 120. The communication protocol may be a wired communication protocol or a wireless communication protocol. The wired communication protocol may be provided to establish a communication link between at least two electronic devices (e.g., the first and second electronic devices 110 and 120) using, e.g., a data cable (e.g., a DDMI cable or a C-type cable). The wireless communication protocol may be provided to support short-range wireless communication such as Bluetooth, Wi-Fi direct, or IrDA.

The connection procedure may be triggered by a request of any one of the first electronic device 110 or the second electronic device 120. The connection procedure triggered by a request of any one of the first electronic device 110 or the second electronic device 120 may be completed by a response of the counterpart electronic device. The connection procedure may be completed by establishing a communication link between the first electronic device 110 and the second electronic device 120 based on a specific communication protocol. For example, the first electronic device 110 may request the second electronic device 120 to connect based on a specific communication protocol. The second electronic device 120 may accept a connection request of the first electronic device 110. Accordingly, the first electronic device 110 and the second electronic device 120 are operable to be connected by a communication link based on the specific protocol. After the connection procedure is completed, the first electronic device 110 is operable to transmit data, information, or a signal to the second electronic device 120. After the connection procedure is completed, the second electronic device 120 is operable to receive data, information, or a signal from the first electronic device 110. After the connection procedure is completed, the second electronic device 120 is operable to transmit data, information, or a signal to the first electronic device 110. After the connection procedure is completed, the first electronic device 110 is operable to receive data, information, or a signal from the second electronic device 120.

Through the connection procedure, the first electronic device 110 may exchange information or data necessary to play (or associated with executing) the game with the second electronic device 120. For example, the first electronic device 110 is operable to receive information about the type of the game interface to be used to play the game from the second electronic device 120. The first electronic device 110 is operable to output a virtual game pad screen using the information about the type of the game interface provided from the second electronic device 120.

The first electronic device 110 is operable to transmit mapping information to the second electronic device 120 (operation 220). The mapping information may include information defining a function mapped for each of the function buttons to be included in the game interface screen. The first electronic device 110 may transmit the mapping information when the connection with the second electronic device 120 is established (see FIG. 7A). The first electronic device 110 is operable to transmit the mapping information to the second electronic device 120 when the game is played (see FIG. 7B).

The second electronic device 120 is operable to configure a game interface screen using the mapping information and is operable to display the configured game interface screen on the display (operation 230). The second electronic device 120 is operable to map a function identifier for each function button using the mapping information, and is operable to configure a game interface screen so that it is visually identified that the button identifier and the function identifier are in a mapping relationship (reference numeral 740 of FIG. 7A, reference numeral 780 of FIG. 7B, reference numeral 840 of FIG. 7C, and reference numeral 880 of FIG. 7D).

The second electronic device 120 is operable to receive the mapping information when the connection with the first electronic device 110 is established (see FIG. 7A). The second electronic device 120 is operable to receive mapping information when the game is played on the first electronic device 110 (see FIG. 7B). The mapping information may include information defining a function mapped for each of the function buttons to be included in the game interface screen. The game interface screen may be used by the user to control (e.g. play) the game using a touch interaction (e.g., touch functions). The game interface screen may be provided by modeling, e.g., a game pad. The game interface screen may be different for each game. The game interface screen may include a plurality of function buttons for touch interaction with the user. Each of the function buttons may be mapped to one or more functions supported by the game (reference numeral 740 of FIG. 7A, reference numeral 780 of FIG. 7B, reference numeral 840 of FIG. 7C, and reference numeral 880 of FIG. 7D).

The first electronic device 110 is operable to monitor whether an event requiring a change in the mapping information occurs (operation 240). If the game state of the game being played (or game in play) (e.g., the attack mode or the defend mode in the soccer game) changes, the first electronic device 110 is operable to determine that the event requiring the change in the mapping information occurs. If the game screen is changed to a screen displaying additional information (e.g., map information or game configuration information), the first electronic device 120 is operable to determine that an event requiring a change in mapping information occurs.

The first electronic device 110 is operable to transmit the changed mapping information to the second electronic device 120 in response to occurrence of an event requiring a change in the mapping information (operation 250). The changed mapping information may include information defining a change function mapped (or assigned) to each of the function buttons to be included in the game interface screen (see FIG. 7C).

The second electronic device 120 is operable to reconfigure the game interface screen using the changed mapping information and may display the reconfigured game interface screen on the display (operation 260).

As described above, the first electronic device 110 is operable to determine a function identifier to be mapped (or assigned) to each of the function buttons to be included in the game interface screen of the second electronic device 120 and is operable to transmit mapping information including the button identifier for identifying each of the function buttons and information about the function identifier determined to be mapped for each of the function buttons to the second electronic device 120 (see FIGS. 7A, 7B, 7C, and 7D). The first electronic device 110 is operable to display the function identifier and the button identifier for identifying the function button to which the function identifier is mapped in a partial (or specified) area of the game screen displayed on the display (see reference numeral 720 of FIG. 7A).

The first electronic device 110 is operable to determine a game interface type to be displayed on the display of the second electronic device 120 in response to the connection with the second electronic device 120. The first electronic device 110 is operable to obtain a button identifier for identifying function buttons to be included in the game interface screen corresponding to the determined game interface type. As an example, the first electronic device 110 is operable to identify function icons on the game screen displayed on the display and is operable to determine the identified function icons as function identifiers.

The first electronic device 110 is operable to display a virtual game pad screen including function information corresponding to each of the function buttons configurable to be used in a specific game on the display. The first electronic device 110 is operable to obtain function information mapped corresponding to each of the function buttons on the virtual game pad screen. The first electronic device 110 is operable to transmit mapping information, including the button identifier for identifying each of the function buttons and the function information mapped for each of the function buttons, to the second electronic device 120 in response to execution of the specific game (see FIG. 7B).

The first electronic device 110 is operable to display, on the display, a virtual game pad screen including function information configurable to be applied differently for each game state corresponding to each of the function buttons configurable to be used in the specific game. The first electronic device 110 is operable to obtain function information mapped differently for each game state corresponding to each of the function buttons on the virtual game pad screen. The first electronic device 110 is operable to transmit, to the second electronic device 120, mapping information including the button identifier for identifying each of the function buttons and first function information mapped for each of the function buttons to play in a first game state in response to execution of the specific game. If a mapping information change event occurs due to a change in the play game state of the specific game from the first game state to a second game state, the first electronic device 110 is operable to transmit mapping information, including the button identifier for identifying each of the function buttons and second function information mapped for each of the function buttons to play in the second game state, to the second electronic device 120 (see FIG. 7C).

As described above, the second electronic device 120 is operable to receive mapping information defining a mapping relationship between function buttons and function information from the first electronic device 110 (see FIGS. 7A, 7B, 7C, and 7D). The second electronic device 120 is operable to obtain, from the mapping information, a button identifier for identifying each of the function buttons and the function information determined to be mapped for each of the function buttons. The second electronic device 120 is operable to output a game interface screen on which identification information about a function mapped corresponding to each of the function buttons is displayed using the button identifier and the function information (reference numeral 740 of FIG. 7A, reference numeral 780 of FIG. 7B, reference numeral 840 of FIG. 7C, and reference numeral 880 of FIG. 7D). The second electronic device 120 is operable to display at least one of an icon or a text for identifying a function mapped to each of the function buttons included in the game interface screen using the button identifier and the function information.

The second electronic device 120 is operable to receive, from the first electronic device 110, second mapping information defining a mapping relationship between the function buttons and a function to play in the second game state in response to the game state of the game being played being changed from the first game state to the second game state (see FIG. 7C). The second electronic device 120 is operable to obtain, from the second mapping information, the button identifier for identifying each of the function buttons and function information mapped for each of the function buttons in the second game state. The second electronic device 120 is operable to output a game interface screen in which identification information about the function displayed corresponding to each of the function buttons is changed using the button identifier and the function information (reference numeral 840 of FIG. 7C).

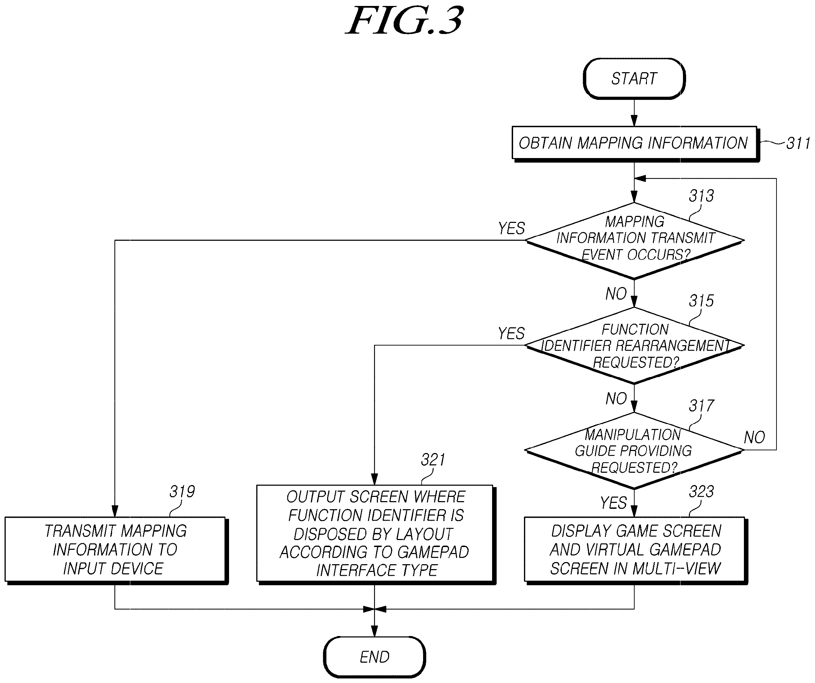

FIG. 3 is a flowchart illustrating control performed to provide a UI in a game play device (e.g., the first electronic device 110 of FIG. 1) according to one or more embodiments.

Referring to FIG. 3, in operation 313, the first electronic device 110 is operable to obtain mapping information. The mapping information may include a button identifier for identifying function buttons and a function identifier for identifying functions to be used during game play. The mapping information may include information about a mapping relationship between the button identifier and the function identifier. In order to obtain mapping information, the first electronic device 110 needs to identify a button identifier for identifying function buttons configurable to be included in a game interface screen to be output by an input device (e.g., the second electronic device 120 of FIG. 1). In order to obtain mapping information, the first electronic device 110 needs to identify a function identifier for identifying functions to be used to play a game.

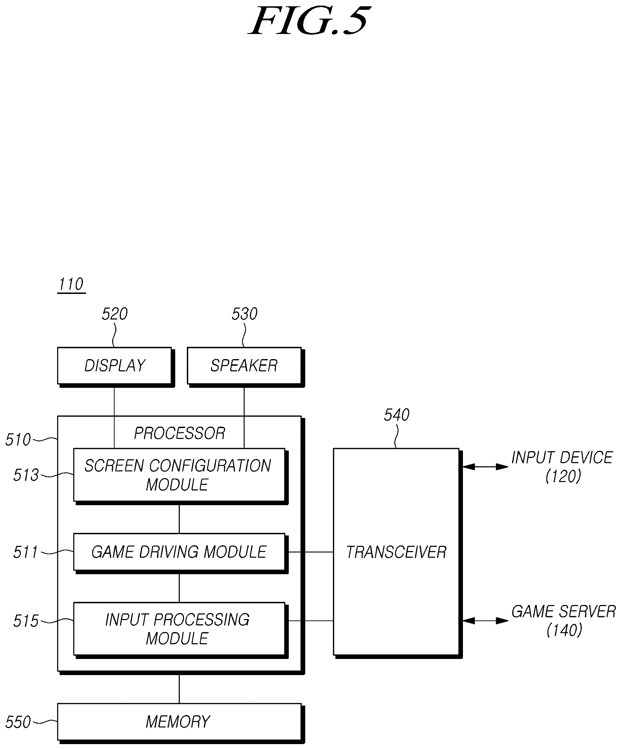

The first electronic device 110 is operable to extract the mapping relationship between the button identifier and the function identifier included in the game screen by analyzing the game screen displayed on the display (e.g., the display 520 of FIG. 5).

According to an embodiment, the first electronic device 110 is operable to identify button identifiers included in the game screen by analyzing the game screen. The first electronic device 110 is operable to analyze the surrounding image of each button identifier identified on the game screen to obtain the function identifier (e.g., the function icon or function information) to be mapped to the corresponding button identifier. The first electronic device 110 is operable to obtain mapping information based on the mapping relationship between the button identifier and the function identifier.

According to an embodiment, the first electronic device 110 is operable to display a virtual game pad screen including function information corresponding to each of the function buttons to be used in a specific game on the display in response to a user request. The first electronic device 110 is operable to analyze the virtual game pad screen to identify button identifiers included in the virtual game pad screen. The first electronic device 110 is operable to analyze the surrounding image of each button identifier identified on the virtual game pad screen to obtain the function identifier (e.g., the function icon or function information) to be mapped to the corresponding button identifier. The first electronic device 110 is operable to obtain mapping information based on the mapping relationship between the button identifier and the function identifier.

According to an embodiment, in response to the user's request, the first electronic device 110 is operable to display, on the display, a plurality of virtual game pad screens including function information to be applied differently for each game state (e.g., an attack mode or a defend mode in a soccer game) corresponding to each of the function buttons to be used in a specific game. The first electronic device 110 is operable to analyze the virtual game pad screen to identify button identifiers included in the virtual game pad screen. The first electronic device 110 is operable to obtain a function identifier (e.g., a function icon or function information) to be applied differently for each game state for each function button for a virtual game pad screen for each game state. The first electronic device 110 is operable to obtain mapping information for each game state based on the mapping relationship between the button identifier and the function identifier.

According to an embodiment, the first electronic device 110 is operable to display a screen for displaying additional information (e.g., map information or game configuration information) on the display in response to a user request. The first electronic device 110 is operable to identify button identifiers included in the additional information display screen by analyzing the screen displaying the additional information. The first electronic device 110 is operable to analyze the surrounding image of each button identifier identified on the additional information display screen to obtain the function identifier (e.g., the function icon or function information) to be mapped to the corresponding button identifier. The first electronic device 110 is operable to obtain mapping information based on the mapping relationship between the button identifier and the function identifier.

In operation 313, the first electronic device 110 is operable to detect the occurrence of a mapping information transmit event. The mapping information transmit event may be generated if the first electronic device 110 establishes a connection with the input device 120 (see FIG. 7A). The mapping information transmit event may be generated by identifying that a specific game is played on the first electronic device 110 (see FIG. 7B). The mapping information transmit event may be generated when the game state of the game being played on the first electronic device 110 is changed (e.g., switching from the attack mode to the defend mode in the soccer game) (see FIG. 7C). The mapping information transmit event may be generated when the screen output by the first electronic device 110 through the display is changed from the game screen to the additional information display screen (see FIG. 7D).

When detecting the occurrence of the mapping information transmit event, the first electronic device 110 is operable to transmit the mapping information to the input device 120 in operation 319 (see reference numeral 751 of FIG. 7A, reference numeral 795 of FIG. 7B, reference numeral 855 of FIG. 7C, and reference numeral 891 of FIG. 7D).

In operation 315, the first electronic device 110 is operable to detect a function identifier reposition request. The function identifier reposition request may be detected by the user requesting to change the layout for determining the arrangement of function-related identifiers (e.g., button identifiers or function identifiers) displayed on the game screen.

If the first electronic device 110 detects the function identifier reposition request, in operation 321, the first electronic device 110 is operable to change a first game screen (e.g., the first game screen 910 of FIG. 7E) in which function-related identifiers are arranged in a first layout (e.g., the first layout 911 of FIG. 7E) to a second game screen (e.g., the second game screen 920 of FIG. 7E) in which function-related identifiers are arranged in a second layout (e.g., the second layout 921 of FIG. 7E). The second layout may be configured based on, e.g., an identifier arrangement on the game interface screen that the input device 120 outputs through the display. In this case, the arrangement of the function-related identifiers displayed on the game screen by the first electronic device 110 according to the second layout may be substantially the same as the arrangement of the identifiers displayed on the game interface screen by the input device 120. In this case, the user may identify the function mapped for each function button by (or on) the game screen being output by the first electronic device 110.

In operation 317, the first electronic device 110 is operable to detect a manipulation guide providing request (e.g., the manipulation guide providing request 961 of FIG. 7F). The manipulation guide providing request may be detected by the user requesting to output the manipulation guide through the display.

If the first electronic device 110 detects the manipulation guide providing request, in operation 323, the first electronic device 110 is operable to output the game screen and the screen displaying the manipulation guide through the display using the multi-view function (e.g., see the multi-view screen 950 of FIG. 7F). The manipulation guide providing request may be generated if a function button, included in the game interface screen of the input device 120, is touched by the user.

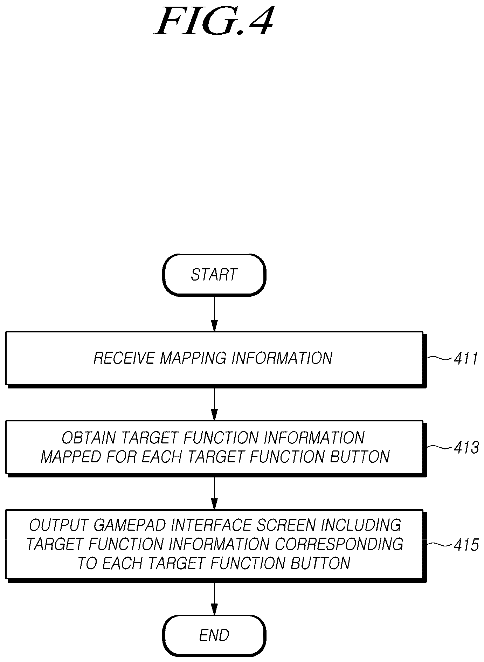

FIG. 4 is a flowchart illustrating control performed to provide a UI in a game controller (e.g., the second electronic device 120 of FIG. 1) according to an embodiment of the disclosure.

Referring to FIG. 4, in operation 411, the second electronic device 120 is operable to receive mapping information from a first electronic device (the first electronic device 110 of FIG. 1) (see FIGS. 7A, 7B, 7C, and 7D). The mapping information may define the mapping relationship between the button identifier for identifying function buttons and the function identifier for identifying functions in the game.

In operation 413, the second electronic device 120 is operable to obtain button identifiers and a function identifier mapped for each button identifier. The button identifier is an identifier indicating each function button included in the game interface screen. The function identifier is an identifier indicating each function that may be used to play (e.g., assigned in) a game. The mapping information may define a function identifier mapped to each button identifier.

In operation 415, the second electronic device 120 is operable to output a game interface screen considering (or regarding) button identifiers, function identifiers, and a mapping relationship between the two (2) identifiers (reference numeral 740 of FIG. 7A, reference numeral 780 of FIG. 7B, and reference 880 of FIG. 7D). The second electronic device 120 is operable to configure a game interface screen so that a mapping relationship between function buttons and at least one of an icon or text for identifying a function is visually identified.

In operation 411, the second electronic device 120 is operable to receive, from the first electronic device, second mapping information as the game state of the game being played is changed from the first game state to the second game state (see FIG. 7C). The second mapping information is operable to define a mapping relationship in which functions for playing a game in the second game state are newly mapped to function buttons.

In operation 413, the second electronic device 120 is operable to obtain, from the second mapping information, a button identifier for identifying each of the function buttons and function information mapped for each function button in the second game state.

In operation 415, the second electronic device 120 is operable to output a game interface screen changed to display the mapping relationship about the function information changed corresponding to each of the function buttons using the button identifier and the function information (reference numeral 840 of FIG. 7C).

FIG. 5 is a block diagram illustrating an example configuration of a game play device (e.g., the first electronic device 110 of FIG. 1) according to one or more embodiments.

Referring to FIG. 5, the first electronic device 110 includes at least one processor 510, a display 520, a speaker 530, a transceiver 540, or memory 550. The processor 510 includes a game driving module 511, a screen configuration module 513, and an input processing module 515. The game driving module 511, the screen configuration module 513, or the input processing module 515 may include a unit implemented in hardware, software, or firmware. The game driving module 511, the screen component module 513, or the input processing module 515 may be interchangeably used with other terms, e.g., logic, logic block, component, or circuit. The game driving module 511, the screen component module 513, or the input processing module 515 may be a homogeneous (or integral) component or a minimum unit of the component or part of the component capable of performing one or more functions. For example, the game driving module 511, the screen configuration module 513, or the input processing module 515 may be implemented in the form of an application-specific integrated circuit (ASIC). The first electronic device 110 may include additional components other than the illustrated components, or at least one of the illustrated components may be omitted.

The processor 510 is operable to execute software (e.g., a program) to control at least one other component (e.g., a hardware or software component) connected thereto. The processor 510 is operable to perform various data processing or computations. As at least part of the data processing or computations, the processor 510 is operable to store, in the memory 550, instructions, commands, data, information, or signals received from other components (e.g., the transceiver 540, an input means such as a keyboard or a mouse (not shown)). The processor 510 is operable to process instructions, commands, data, information, or signals stored in the memory 550. The processor 510 is operable to store, in the memory 550, data resulting from processing instructions, commands, data, information, or signals. The processor 510 includes a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, when the first electronic device 110 includes a main processor and an auxiliary processor, the auxiliary processor may be configured to use less power than the main processor or configured for a specific function. The auxiliary processor may be implemented separately from or as part of the main processor.

The display 520 may include a liquid crystal (LCD), a light-emitting diode (LED), an organic light-emitting diode (OLED), a plasma display panel (PDP), a flexible display, or a 3D display. The display 520 may include decoders of various standards. The display 520 may include a decoder for decoding a game image stream transmitted from the screen configuration module 513 included in the processor 510. The display 520 may output a game screen using the decoded game image data.

The speaker 530 is operable to output auditory information to the outside (e.g., to the user). The speaker 530 may decode an audio stream (e.g., a game audio stream) transmitted from the processor (e.g., the game driving module 511 or the input processing module 515) to generate an audible signal. Earphones or headphones may be used instead of the speaker 530.

The transceiver 540 is operable to support establishing a direct (e.g., wired) communication channel or a wireless communication channel between the first electronic device 110 and an external electronic device (e.g., the second electronic device 120 or the game server 140 of FIG. 1) and performing communication through the established communication channel. The transceiver 540 may include one or more communication processors to support direct (e.g., wired) communication or wireless communication. The one or more communication processors may be operated independently of the processor 510 (e.g., an application processor). The transceiver 540 may include a wireless communication module (e.g., a cellular communication module, a short-range wireless communication module, or a global navigation satellite system (GNSS) communication module) or a wired communication module (e.g., a local area network (LAN) communication module or a power line communication module).

The memory 550 is operable to store instructions, commands, data, information, or signals used by at least one component (e.g., the processor 510) of the first electronic device 110. The object stored in the memory 550 may include, e.g., software (e.g., a program) and input data or output data for a command related thereto. The memory 550 may include a volatile memory or a non-volatile memory.

Although not illustrated, the first electronic device 110 may include a UI separately from the display 520. The UI may receive an instruction, a command, data, information, or a signal used by a component (e.g., the processor 510) of the first electronic device 110 from an outside source (e.g., the user). The UI may include, e.g., a microphone, a mouse, a keyboard, a key (e.g., a button), or a digital pen (e.g., a stylus pen).

According to an embodiment, the processor 510 is operable to perform an operation for playing a game based on at least one platform. The processor 510 may operate based on an online platform capable of executing a game by accessing the game server 140 through a network. The type of game(s) that may be accessed via the game server 140 may include, e.g., at least one of a cloud game, a cross-platform game, or an online mode game. The processor 510 may operate based on an offline platform capable of executing a game independently without accessing the game server 140. The game(s) that may be executed without accessing the game server 140 may include games executable on a separate game device (e.g., a game console or local hardware such as a PC) or games having offline mode.

The processor 510 is operable to receive an instruction or a command instructing execution of a game from an input device (e.g., the second electronic device 120 of FIG. 1) through the transceiver 540. The processor 510 is operable to execute a target game in response to the instruction or the command. The procedure for executing the target game may be determined according to the platform on which the target game is based. The target game may be executed by the game driving module 511 included in the processor 510.

The processor 510 is operable to output a game screen according to execution of the target game through the display 520. The game screen output to the display 520 may be generated by the screen configuration module 513 included in the processor 510.

The processor 510 is operable to perform game play based on the input signal of the input device 120 according to the user's manipulation (e.g., control or input) while the game is being played. The play of the game, based on the input signal, may be performed by the game driving module 511 or the input processing module 515 included in the processor 510. The processor 510 is operable to output a game screen reflecting a game state in which the game is executed through the display 520.

The processor 510 is operable to transmit mapping information for configuring a game interface screen to the input device 120 through the transceiver 540 (see FIGS. 7A, 7B, 7C, and 7D). The game interface screen may be a UI screen output through the display of the input device 120 so that the user may perform a touch interaction for controlling the play of the game. The game interface screen may be different for each game. The game interface screen may include a plurality of function buttons for touch interaction with the user. Each of the function buttons is mapped to one or more functions supported by the game. The mapping information includes information defining a function mapped for each of the function buttons included in the game interface screen.

The processor 510 is operable to transmit the mapping information to the input device 120 through the transceiver 540 when the connection with the input device 120 is established (see FIG. 7A). The processor 510 is operable to transmit the mapping information to the input device 120 when the game is played (see FIG. 7B). If a game state (e.g., an attack mode or a defend mode in a soccer game) of a game being played changes, the processor 510 is operable to transmit mapping information, reflecting the changed game state, to the input device 120 (see FIG. 7C). If the game screen is changed to a screen displaying additional information (e.g., map information or game configuration information), the processor 510 is operable to transmit mapping information reflecting the changed screen to the input device 120 (see FIG. 7D).

The processor 510 is operable to change the layout corresponding to the arrangement of function-related identifiers (e.g., button identifiers or function identifiers) displayed on the game screen in response to the user's request (see FIG. 7E). The layout may be changed to reflect, e.g., the arrangement of identifiers on the game interface screen that the input device 120 outputs through the display. In this case, the arrangement of the identifiers displayed on the game screen according to the changed layout may be substantially the same as the arrangement of the identifiers displayed on the game interface screen being output by the input device 120.

The processor 510 is operable to change the game screen in response to the user's request. For example, if the user requests the output of the manipulation guide in the game state in which the game screen is being output, the processor 510 is operable to output a multi-view screen including the game screen and the screen displaying the manipulation guide through the display 520 (see FIG. 7F). To that end, the processor 510 is operable to decrease the size of the display area of the game screen on the display 520 from being displayed on the entire area to a partial area. The processor 510 is operable to output the screen displaying the manipulation guide in an area acquired by decreasing the display area that used to display the game screen. The screen displaying the manipulation guide is operable to display a virtual game pad screen including function information corresponding to each of the function buttons used to play the corresponding game. For example, if the user requests to terminate the output of the manipulation guide in a game state where the multi-view screen is being output, the processor 510 is operable to stop the output of the multi-view screen and extend (or expand) the display area of the game screen to cover the entire area of the display 520.

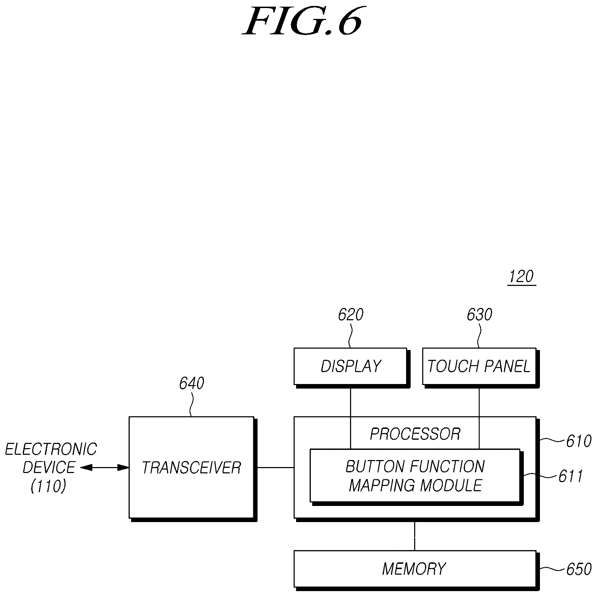

FIG. 6 is a block diagram illustrating an example game controller (e.g., the second electronic device 120 of FIG. 1) according to one or more embodiments.

Referring to FIG. 6, the second electronic device 120 includes at least one processor 610, a display 620, a touch panel 630, a transceiver 640, or memory 650. The processor 610 includes a button function mapping module 611.

The button function mapping module 611 may include a unit implemented in hardware, software, or firmware. The button function mapping module 611 may be interchangeably used with terms such as logic, logic block, component, or circuit. The button function mapping module 611 may be a homogeneous (or integral) component or a minimum unit of the component or its part, which performs one or more functions. For example, the button function mapping module 611 may be implemented in the form of an ASIC. The second electronic device 120 may include additional components other than the illustrated components, or at least one of the illustrated components may be omitted.

The processor 610 is operable to execute software (e.g., a program) to control at least one other component (e.g., a hardware or software component) connected thereto. The processor 610 is operable to perform various data processing or computations. As at least part of the data processing or computations, the processor 510 is operable to store, in the memory 650, instructions, commands, data, information, or signals received from other components (e.g., the transceiver 540 or the touch panel 630). The processor 610 is operable to process instructions, commands, data, information, or signals stored in the memory 650. The processor 610 is operable to store, in the memory 650, data resulting from processing instructions, commands, data, information, or signals. The processor 610 is operable to include a main processor (e.g., a CPU or an AP), or an auxiliary processor (e.g., a GPU, a NPU, an ISP, a sensor hub processor, or a CP) that is operable independently from, or in conjunction with, the main processor. For example, if the second electronic device 130 includes a main processor and an auxiliary processor, the auxiliary processor is operable to be configured to use less power than the main processor or configured for a specific function. The auxiliary processor may be implemented separately from or as part of the main processor.

The display 620 may include a LCD, a LED, an OLED, a PDP, a flexible display, or a 3D display. The display 620 may include decoders of various standards. The display 620 may include a decoder for decoding the game image stream transmitted from the processor 610. The display 620 may output a game interface screen in response to the control of the processor 610.

The touch panel 630 is operable to generate touch data, which is an electrical signal corresponding to a touch input, through a touch interaction with the user (e.g., a game player). The touch data may be related to sensing information that is output by detecting the position or area corresponding to a specific portion of the touch panel 630 touched by the user. The touch data may include position information corresponding to the specific portion touched by the user. The touch data may include area information in the specific portion touched by the user. The touch data may include position information and/or area information in the specific portion touched by the user. The specific portion may be, e.g., a portion provided with a sensor capable of detecting contact of a body in the second electronic device 120 by an electrostatic manner.

The transceiver 640 is operable to support establishing a direct (e.g., wired) communication channel or a wireless communication channel between the second electronic device 120 and an external electronic device (e.g., the first electronic device 110 of FIG. 1) and performing communication through the established communication channel. The transceiver 640 includes one or more communication processors supporting direct (e.g., wired) communication or wireless communication. The one or more communication processors may be operated independently of the processor 610 (e.g., an application processor). The transceiver 640 may include a wireless communication module (e.g., a cellular communication module, a short-range wireless communication module, or a GNSS communication module) or a wired communication module (e.g., a LAN communication module or a power line communication module).

The memory 650 is operable to store instructions, commands, data, information, or signals used by at least one component (e.g., the processor 610) of the second electronic device 120. The object stored in the memory 650 may include, e.g., software (e.g., a program) and input data or output data for a command related thereto. The memory 650 may include a volatile memory or a non-volatile memory.

According to an embodiment, the processor 610 is operable to perform overall (or comprehensive) control for serving as a UI, capable of controlling a game based on a touch interaction. The UI may be a game interface for controlling a game. The game interface may be an application program that may be executed by the processor 610. The processor 610 is operable to execute a corresponding application program according to a request for activating the game interface function. In response to the execution of the corresponding application program, the processor 610 is operable to display a game interface screen on the display 620. The processor 610 may perform a touch interaction with the user for controlling a game through the game interface screen through the touch panel 630. The processor 610 is operable to obtain the user's instruction or command through the touch interaction. The processor 610 is operable to transmit the obtained instruction or command to the first electronic device 110 through the transceiver 640. The instruction or command transmitted to the first electronic device 110 may be reflected in playing the corresponding game.

The processor 610 is operable to display a game interface screen for controlling game play on the display 620. The game interface screen may be provided by modeling, e.g., a game pad. The game interface screen may be different for each game. The game interface screen may include a plurality of function buttons for touch interaction with the user. Each of the function buttons may be mapped (or assigned) to one or more functions supported by the game.

The processor 610 is operable to receive mapping information from the first electronic device 110 through the transceiver 640. The mapping information may include information defining a function mapped for each of the function buttons to be included in the game interface screen. The processor 610 is operable to receive the mapping information when the connection with the first electronic device 110 is established. The processor 610 is operable to receive the mapping information when the game is played (or executed) on the first electronic device 110. If the game screen is changed (or refreshed) to a screen displaying additional information (e.g., map information or game configuration information) in the first electronic device 110, the processor 610 is operable to receive mapping information reflecting (or incorporating) the changed (or refreshed) screen. If the game screen is changed (or refreshed) to a screen displaying additional information (e.g., map information or game configuration information) in the first electronic device 110, the processor 610 is operable to receive mapping information reflecting (or incorporating) the changed (or refreshed) screen.

The processor 610 is operable to separately store mapping information used to output the game interface screen for each game in the memory 650. If an event occurs, the processor 610 is operable to identify whether mapping information, corresponding to the occurring event, is present in the memory 650. If the mapping information is present (or stored) in the memory 650, the processor 610 is operable to access the mapping information from the memory 650 to output a game interface screen through the display 620.

FIG. 7A is a view illustrating an example of configuring a game interface screen of an input device (e.g., the second electronic device 120 of FIG. 1) in a game system (e.g., the game system 10 of FIG. 1) according to one or more embodiments.

Referring to FIG. 7A, if a game is played (or executed), the electronic device 110 (e.g., the first electronic device 110 of FIG. 1) is operable to output a game screen 710 on a display (e.g., the display 520 of FIG. 5). The game screen 710 may be a screen on which a game is being played.

The electronic device 110 is operable to display information (721, 722, 723, 724, 725, and 726) (hereinafter, referred to as "function-related information") related to a function that may be used or selected for a game in response to the user's request in a partial area 720 (hereinafter, referred to as "mapping information display area") of the game screen 710. For example, the electronic device 110 is operable to display function identifiers (721-1, 722-1, 723-1, 724-1, 725-1, and 726-1) and button identifiers (721-2, 722-2, 723-2, 724-2, 725-2, and 726-2) for identifying function buttons mapped around the function identifiers in the mapping information display area 720. The electronic device 110 is operable to no longer display function-related information (721, 722, 723, 724, 725, and 726) in the mapping information display area 720 in response to a user request. The mapping information display area 720 may be provided near the lower left side of the game screen 710. The mapping information display area 720 may be provided at another position based on the user's setting or the layout of the game screen. The mapping information display area 720 may be moved to another position based on the user's setting or the layout of the game screen. The mapping information display area 720 may be distributed and disposed in a plurality of areas. The function-related information (721, 722, 723, 724, 725, and 726) includes function identifiers (721-1, 722-1, 723-1, 724-1, 725-1, and 726-1) and button identifiers (721-2, 722-2, 723-2, 724-2, 725-2, and 726-2), respectively mapped to the function identifiers (721-1, 722-1, 723-1, 724-1, 725-1, and 726). The function identifiers (721-1, 722-1, 723-1, 724-1, 725-1, and 726-1) are identifiers indicating functions that may be used or selected during game play. The function identifiers (721-1, 722-1, 723-1, 724-1, 725-1, and 726-1) are, e.g., function icons implying corresponding functions. The button identifiers (721-2, 722-2, 723-2, 724-2, 725-2, and 726-2) are identifiers for identifying function buttons (731, 732, 733, 734, 735, and 736) included in the first game interface screen 730. The button identifiers (721-2, 722-2, 723-2, 724-2, 725-2, and 726-2) are button labels L1, L2, R2, R1, ∘, and △. The first game interface screen 730 is a game interface screen displayed on a display (e.g., the display 620 of FIG. 6) of the input device 120 before function mapping of each button (hereinafter, referred to as "function mapping") is performed. The layout of the first game interface screen 730 is configured to be suitable for the game being played on the electronic device 110. The layout of the first game interface screen 730 is configured to correspond to the type of game pad selected by the user. The user may identify the function mapped for each button through the arrangement of the function identifiers (721-1, 722-1, 723-1, 724-1, 725-1, and 726-1) and the button identifiers (721-2, 722-2, 723-2, 724-2, 725-2, and 726-2) displayed in the mapping information display area 720.

The electronic device 110 is operable to determine the type of the game interface to be provided by the input device 120 in response to the connection with the input device 120. The type of the game interface may correspond to a specific game pad suitable for a game to be played or supporting a game to be played among various game pads. The type of the function buttons (731, 732, 733, 734, 735, or 736) and/or the arrangement of the function buttons (731, 732, 733, 734, 735, or 736) on the game interface screen 730 may vary depending on the type of the game interface. The type of the game interface to be applied to the input device 120 may be configured or selected by the user. The input device 120 is operable to provide identification information indicating the type of the game interface configured or selected by the user to the electronic device 110. The electronic device 110 is operable to determine the type of the game interface to be applied to the input device 120 based on the identification information provided from the input device 120. The electronic device 110 is operable to previously identify the type and/or arrangement of the function buttons (731, 732, 733, 734, 735, and 736) to be included in the game interface screen 730 corresponding to the determined type of the game interface.

According to an embodiment, the electronic device 110 is operable to identify button identifiers (721-2, 722-2, 723-2, 724-2, 725-2, and 726-2) displayed in the mapping information display area 720. The electronic device 110 is operable to identify function icons (721-1, 722-1, 723-1, 724-1, 725-1, and 726-1) displayed in the mapping information display area 720. In the mapping information display area 720, button identifiers (721-2, 722-2, 723-2, 724-2, 725-2, and 726-2) and function icons (721-1, 722-1, 723-1, 724-1, 725-1, and 726-1) in a mapping relationship is operable to be disposed adjacent to each other. Based on this, the electronic device 110 is operable to define a correspondence relationship between the identified button identifiers (721-2, 722-2, 723-2, 724-2, 725-2, and 726-2) and the identified function icons (721-1, 722-1, 723-1, 724-1, 725-1, and 726-1). The electronic device 110 is operable to obtain function-related information (721, 722, 723, 724, 725, and 726) based on the correspondence relationship between the identified button identifiers (721-2, 722-2, 723-2, 724-2, 725-2, and 726-2) and the identified function icons (721-1, 722-1, 723-1, 724-1, 725-1, and 726).

According to an embodiment, the electronic device 110 is operable to extract function-related information (721, 722, 723, 724, 725, and 726) from the mapping information display area 720 of the game screen 710. The electronic device 110 is operable to identify button identifiers (721-2, 722-2, 723-2, 724-2, 725-2, and 726-2) displayed in the mapping information display area 720 using the obtained function-related information (721, 722, 723, 724, 725, and 726). The electronic device 110 is operable to identify function identifiers (721-1, 722-1, 723-1, 724-1, 725-1, and 726-1) using the obtained function-related information (721, 722, 723, 724, 725, and 726). For example, to identify the function identifiers (721-1, 722-1, 723-1, 724-1, 725-1, and 726-1), the electronic device 110 is operable to analyze the surrounding image of the identified button identifiers (721-2, 722-2, 723-2, 724-2, 725-2, and 726-2) in the mapping information display area 720. The electronic device 110 is operable to analyze the surrounding image of the identified button identifiers (721-2, 722-2, 723-2, 724-2, 725-2, and 726) using the obtained function-related information (721, 722, 723, 724, 725, and 726). The electronic device 110 is operable to determine the function identifiers (721-1, 722-1, 723-1, 724-1, 725-1, and 726-1) to be mapped to the function buttons (731, 732, 733, 734, 735, and 736), respectively, of the first game interface screen 730 displayed on the input device 120 based on the identified button identifiers (721-2, 722-2, 723-2, 724-2, 725-2, and 726-2) and the identified function identifiers (721-1, 722-1, 723-1, 724-1, 725-1, and 726-1).

The electronic device 110 is operable to generate mapping information 751 defining a mapping relationship between the button identifiers (721-2, 722-2, 723-2, 724-2, 725-2, and 726-2) and the function identifiers (721-1, 722-1, 723-1, 724-1, 725-1, and 726). The mapping information 751 includes button identifiers (721-2, 722-2, 723-2, 724-2, 725-2, and 726-2) for identifying the function buttons (731, 732, 733, 734, 735, and 736). The mapping information 751 includes function identifiers (721-1, 722-1, 723-1, 724-1, 725-1, and 726-1) determined for the function buttons (731, 732, 733, 734, 735, and 736). The mapping information 751 includes information defining a mapping relationship between the button identifiers (721-2, 722-2, 723-2, 724-2, 725-2, and 726-2) and the function identifiers (721-1, 722-1, 723-1, 724-1, 725-1, and 726). The electronic device 110 is operable to transmit the mapping information 751 to the input device 120. In order to transmit the mapping information 751, the electronic device 110 is operable to be connected through a communication link with the input device 120.

The input device 120 is operable to receive mapping information 751 from the electronic device 110. The mapping information 751 defines a mapping relationship between function buttons and function information. The input device 120 is operable to output a second game interface screen 740 on the display 620 based on the mapping information 751.

According to an embodiment, the input device 120 is operable to obtain, from the mapping information 751, a button identifier for identifying each of the function buttons and function information determined to be mapped (or assigned) for each of the function buttons. The input device 120 is operable to map function identifiers corresponding to the function buttons (731, 732, 733, 734, 735, and 736) included in the first game interface screen 730 based on the obtained mapping relationship (operation 753). The input device 120 is operable to output, through the display 620, a second game interface screen 740 displaying a function identifier mapped for each function button indicated by the button identifier.

As described above, the input device 120 is operable to output the first game interface screen 730 on the display 620 until the input device 120 outputs the second game interface screen 740. Only function buttons (731, 732, 733, 734, 735, and 736) to which function information is not mapped are displayed on the first game interface screen 730. The second game interface screen 740 includes identifiers (741, 742, 743, 744, 745, and 746) to which function information is mapped for each of the function buttons. Each of the identifiers (741, 742, 743, 744, 745, and 746) displayed on the second game interface screen 740 is a combination of a function button and function information (e.g., a function icon or a function text) mapped to the function button. In this case, the user may identify the function mapped to each function button through the second game interface screen 740.

As an example, if the mapping relationship between the button identifiers (721-2, 722-2, 723-2, 724-2, 725-2, and 726-2) and the function identifiers (721-1, 722-1, 723-1, 724-1, 725-1, and 726-1) is updated on the game screen 710, the electronic device 110 is operable to provide the mapping information 751 reflecting the same to the input device 120. The input device 120 is operable to update the mapping relationship between the function button and the function on the second game interface screen 740 using the mapping information 751.

FIG. 7B is a view illustrating an example of configuring a game interface screen of an input device (e.g., the second electronic device 120 of FIG. 1) in a game system (e.g., the game system 10 of FIG. 1) according to one or more embodiments.

Referring to FIG. 7B, the electronic device 110 (e.g., the first electronic device 110 of FIG. 1) is operable to output a virtual game pad screen 750 through a display (e.g., the display 520 of FIG. 5) in response to a user request. The virtual game pad screen 750 is operable to include a mapping relationship between a button identifier 753 (e.g., L1, L2, R1, R2, X, □, ∘, and △) and a function identifier 755 (e.g., ①, ②, ③, ④, ⑤, ⑥, ⑦, ⑧, and ⑨) in the image 751 of the game pad. The game pad image 751 to be included in the virtual game pad screen 750 is determined by the type of game pad selected by the user to play the game. The game pad image 751 to be included in the virtual game pad screen 750 corresponds to a game pad set by default.

The electronic device 110 is operable to obtain a mapping relationship 791 between the button identifier 753 (e.g., L1, L2, R1, R2, X, □, ∘, and △) and the function identifier 755 (e.g., ①, ②, ③, ④, ⑤, ⑥, ⑦, ⑧, and ⑨). The electronic device 110 is operable to store the mapping relationship 791 between the button identifier 753 (e.g., L1, L2, R1, R2, X, □, ∘, and △) and the function identifier 755 (e.g., ①, ②, ③, ④, ⑤, ⑥, ⑦, ⑧, and ⑨).

The electronic device 110 is operable to execute a corresponding game in response to the user's request. The electronic device 110 is operable to identify that the executed game is played by the user (operation 793). For example, the electronic device 110 is operable to identify whether the game is executed by analyzing the game screen 760. If the electronic device 110 identifies that the game executed by the user is running (or being played), the electronic device 110 is operable to generate the mapping information 795 based on the mapping relationship 791 obtained and stored before the game is executed. The mapping information 795 includes button identifiers 753 (e.g., L1, L2, R1, R2, X, □, ∘, and △) for identifying the function buttons 771, 772, 773, 774, 775, 776, 777, and 778. The mapping information 795 may include function identifiers 755 (e.g., ①, ②, ③, ④, ⑤, ⑥, ⑦, ⑧, and ⑨) determined to be mapped to the function buttons 771, 772, 773, 774, 775, 776, 777, and 778. The mapping information 751 includes information defining a mapping relationship between the button identifiers 753 (e.g., L1, L2, R1, R2, X, □, o, and △) and the function identifiers 755 (e.g., ①, ②, ③, ④, ⑤, ⑥, ⑦, ⑧, and ⑨).

The electronic device 110 is operable to transmit the mapping information 751 to the input device 120. In order to transmit the mapping information 751, the electronic device 110 is operable to be connected through a communication link with the input device 120.

The input device 120 is operable to output a first game interface screen 770 on the display 620 until the mapping information 795 is received from the electronic device 110. Only function buttons (771, 772, 773, 774, 775, 776, 777, and 778) to which function information is not mapped is operable to be displayed on the first game interface screen 770.

The input device 120 is operable to receive mapping information 795 from the electronic device 110. The mapping information 795 defines a mapping relationship between function buttons and function information.

Table 1 below shows an example of mapping information 795.

**[Table 1]**

| Button identifier (reference numeral) | Function identifier |
|---|---|
| L1 (771) | ② |
| L2 (772) | ③ |
| R1 (773) | ④ |
| R2 (774) | ⑤ |
| (775) | ⑥ |
| (776) | ⑦ |
| X (777) | ⑧ |
| (778) | ⑨ |

The input device 120 is operable to obtain, from the mapping information 795, a button identifier (e.g., L1, L2, R1, R2, ∘, △, X, and □) for identifying each of the function buttons and function information (e.g., ①, ②, ③, ④, ⑤, ⑥, ⑦, ⑧, and ⑨) determined to be mapped for each of the function buttons.

The input device 120 is operable to map the corresponding function identifiers (e.g., ①, ②, ③, ④, ⑤, ⑥, ⑦, ⑧, and ⑨) to function buttons (771, 772, 773, 774, 775, 776, 777, and 778) included in the first game interface screen 730 based on the obtained mapping relationship (operation 797).

The input device 120 is operable to perform function mapping (operation 797) based on the mapping information 795 to output the second game interface screen 780 through the display 620. The second game interface screen 780 displays a function identifier mapped for each function button according to the button identifier. For example, the second game interface screen 780 includes identifiers (781, 782, 783, 784, 785, 786, 787, and 788) where function information is mapped for each of the function buttons. Each of the identifiers (781, 782, 783, 784, 785, 786, 787, and 788) displayed on the second game interface screen 780 is a combination of a function button and function information (e.g., a function icon or a function text) mapped to the function button. In this case, the user may identify the function mapped to each function button through the second game interface screen 780.

FIG. 7C is a view illustrating an example of configuring a game interface screen of an input device (e.g., the second electronic device 120 of FIG. 1) in a game system (e.g., the game system 10 of FIG. 1) according to one or more embodiments.

Referring to FIG. 7C, the electronic device 110 (e.g., the first electronic device 110 of FIG. 1) may output a virtual game pad screen 810 for each game state through a display (e.g., the display 520 of FIG. 5) in response to the user request. For example, in the case of a soccer game, the virtual game pad screen 810 for each game state includes a first virtual game pad screen 811 for playing the game in the attack mode. For example, in the case of a soccer game, the virtual game pad screen 810 for each game state includes a second virtual game pad screen 813 for playing the game in the defend mode. The first and second virtual game pad screens 811 and 813 include the mapping relationship between the button identifier and the function identifier in the image of the game pad. The mapping relationship between the button identifier and the function identifier on the first virtual game pad screen 811 may be different from the mapping relationship between the button identifier and the function identifier on the second virtual game pad screen 813. For example, for the same button identifier, the function identifier mapped in the attack mode and the function identifier mapped in the defend mode is different.

The electronic device 110 is operable to obtain a mapping relationship 851 between button identifiers and function identifiers for each game state. For example, in the case of a soccer game, the electronic device 110 is operable to obtain and store a first mapping relationship 851 in a first game state which is an attack mode and a second mapping relationship 851 in a second game state which is a defend mode.

The electronic device 110 is operable to execute a corresponding game in response to the user's request. The electronic device 110 is operable to identify a game state (operation 853). For example, the electronic device 110 is operable to analyze the game screen 760 to identify the game state in which the game is being played. If the game state in which the game is being played is changed from the previous game state, the electronic device 110 is operable to generate the mapping information 855 based on the mapping relationship 851 corresponding to the changed game state from the mapping relationship 851 obtained and stored before the game is executed. The mapping information 855 includes button identifiers (e.g., L1, L2, R1, R2, ∘, △, X, and □) for identifying the function buttons (831, 832, 833, 834, 835, 836, 837, and 838). The mapping information 855 includes function identifiers (e.g., ①, ②, ③, ④, ⑤, ⑥, ⑦, ⑧, and ⑨) determined to be mapped to the function buttons (831, 832, 833, 834, 835, 836, 837, and 838). The mapping information 855 includes information defining a mapping relationship between the button identifiers (e.g., L1, L2, R1, R2, X, □, ∘, and △) and the function identifiers (e.g., ①, ②, ③, ④, ⑤, ⑥, ⑦, ⑧, and ⑨) configured corresponding to one of the first game state or the second game state.

The electronic device 110 is operable to transmit the mapping information 855 to the input device 120. In order to transmit the mapping information 855, the electronic device 110 is connected through a communication link with the input device 120.

The input device 120 is operable to output a first game interface screen 830 on the display 620 until the mapping information 855 is received from the electronic device 110. Only function buttons (831, 832, 833, 834, 835, 836, 837, and 838) to which function information is not mapped are displayed on the first game interface screen 830. Although not shown, the first game interface screen 830 may be a game interface screen to which a mapping relationship according to a game state (e.g., an attack mode) before being changed is applied.

The input device 120 is operable to receive mapping information 855 from the electronic device 110. The mapping information 855 is operable to define a mapping relationship between function buttons corresponding to a game state (e.g., a defend mode) and function information after being changed.

Table 2 below shows an example of mapping information 855.

**[Table 2]**

| Button identifier (reference numeral) | Function identifier |
|---|---|
| L1 (771) | ② |
| L2 (772) | ③ |
| R1 (773) | ④ |
| R2 (774) | ⑤ |
| (775) | ⑥ |
| (776) | ⑦ |
| X (777) | ⑧ |
| (778) | ⑨ |

The input device 120 is operable to obtain, from the mapping information 855, the button identifier (e.g., L1, L2, R1, R2, ∘, △, X, and □) for identifying each of the function buttons, and function information (e.g., ①, ②, ③, ④, ⑤, ⑥, ⑦, ⑧, and ⑨) determined to be mapped for each function button according to the changed game state.

Based on the obtained mapping relationship, the input device 120 is operable to map corresponding function identifiers (e.g., ①, ②, ③, ④, ⑤, ⑥, ⑦, ⑧, and ⑨) corresponding to the changed game state to the function buttons (831, 832, 833, 834, 835, 836, 837, and 838) included in the first game interface screen 830 (operation 857).

The input device 120 is operable to perform function mapping (operation 857) based on the mapping information 855 to output, through the display 620, a second game interface screen 840 capable of controlling according to the changed game state (e.g., a defend mode). The second game interface screen 840 displays a function identifier mapped for each function button according to the button identifier. For example, the second game interface screen 840 is operable to include identifiers (841, 842, 843, 844, 845, 846, 847, and 848) where function information is mapped for each of the function buttons. Each of the identifiers (841, 842, 843, 844, 845, 846, 847, and 848) displayed on the second game interface screen 840 is a combination of a function button identifier and function information (e.g., a function icon or a function text) mapped to the function button identifier. In this case, it the user may identify the function mapped to each function button through the second game interface screen 840.

FIG. 7D is a view illustrating an example of configuring a game interface screen of an input device (e.g., the second electronic device 120 of FIG. 1) in a game system (e.g., the game system 10 of FIG. 1) according to one or more embodiments.

Referring to FIG. 7D, the electronic device 110 (e.g., the first electronic device 110 of FIG. 1) is operable to change a game screen output through a display (e.g., the display 520 of FIG. 5) to a screen displaying additional information (e.g., map information or game configuration information) in response to a user request. For example, if the user requests map information while the game is being played, the electronic device 110 is operable to output, through the display 520, a screen 860 including a map and mapping information 861 between the function button identifier 863 and the function information 865 that may be used on the map instead of the game screen.

The electronic device 110 is operable to obtain a mapping relationship 861 between the button identifiers 863 and the function information 865 by analyzing a screen on which the additional information is displayed. The electronic device 110 is operable to generate new mapping information 891 based on the obtained mapping relationship 861. The mapping information 891 includes button identifiers (e.g., L2, ∘, △, X, □, and ⊙) for identifying the function buttons (871, 872, 873, 874, 875, and 876). The mapping information 891 may include function information (e.g., multi-play state display, return, blessing list, light column placement, marker, zoom) determined to be mapped to the function buttons (871, 872, 873, 874, 875, and 876). The mapping information 891 includes information defining a mapping relationship between the button identifiers (e.g., L2, ∘, △, X, □, and ⊙) set corresponding to a state in which a screen on which additional information is displayed is output and the function information (e.g., multi-play game state display, return, blessing list, light column placement, marker, and zoom).

The electronic device 110 is operable to transmit the mapping information 891 to the input device 120. In order to transmit the mapping information 891, the electronic device 110 may be connected through a communication link with the input device 120.

The input device 120 is operable to output a first game interface screen 870 on the display 620 until the mapping information 891 is received from the electronic device 110. Only function buttons (871, 872, 873, 874, 875, and 876) to which function information is not mapped are displayed on the first game interface screen 870. Although not shown, the first game interface screen 870 may be a game interface screen to which a mapping relationship according to a state in which a game screen before being changed is being output is applied.

The input device 120 is operable to receive mapping information 891 from the electronic device 110. The mapping information 891 is operable to define a mapping relationship between function buttons corresponding to a state in which a screen on which additional information is displayed is being output and function information.

Table 3 below shows an example of mapping information 891.

**[Table 3]**

| Button identifier (reference numeral) | Function information |
|---|---|
| L2 (871) | Display multi-play state |
| (872) | Return |
| (873) | Blessing list |
| X (874) | Place light column |
| (875) | Marker |
| ⊙ (876) | Zoom |

The input device 120 is operable to obtain, from the mapping information 891, a button identifier (e.g., L2, ∘, △, X, □, and ⊙) for identifying each of the function buttons, and function information (e.g., multi-play game state display, return, blessing list, light column placement, marker, zoom) determined to be mapped for each function button.

Based on the obtained mapping relationship, the input device 120 is operable to map new function information (e.g., multi-play game state display, return, blessing list, light column placement, marker, zoom) to the function buttons (871, 872, 873, 874, 875, and 876) included in the first game interface screen 870 (operation 893).

The input device 120 is operable to perform function mapping (operation 893) based on the mapping information 891 to output, through the display 620, a second game interface screen 880 capable of controlling according to the changed output screen of the first electronic device 110. The second game interface screen 880 displays a function identifier mapped for each function button according to the button identifier. For example, the second game interface screen 880 include identifiers (881, 882, 883, 884, 885, and 886) to which function information is mapped for each of the function buttons. Each of the identifiers (881, 882, 883, 884, 885, and 886) displayed on the second game interface screen 880 is a combination of a function button identifier and function information (e.g., a function icon or a function text) mapped to the function button identifier. In this case, the user may identify the function mapped to each function button through the second game interface screen 880.

FIG. 7E is a view illustrating an example of configuring a game interface screen of an input device (e.g., the second electronic device 120 of FIG. 1) in a game system (e.g., the game system 10 of FIG. 1) according to one or more embodiments.

Referring to FIG. 7E, if a game is played, the electronic device 110 (e.g., the first electronic device 110 of FIG. 1) is operable to output a game screen 910 on a display (e.g., the display 520 of FIG. 5). The game screen 910 may be a screen on which a game is being played. The electronic device 110 is operable to display information related to a function that may be used or selected for a game on the mapping information display area 911 of the game screen 910 in response to a user request. For example, the electronic device 110 may display a button identifier and a function identifier in the mapping information display area 911 considering a mapping relationship.

The electronic device 110 is operable to change a layout corresponding to arrangement of function-related identifiers (e.g., button identifiers or function identifiers) displayed on the game screen 910 in response to the user request. For example, the electronic device 110 is operable to change the first game screen 910 on which function-related identifiers are arranged in the first layout 911 to the second game screen 920 on which function-related identifiers are arranged in the second layout 921. The second layout 921 is configured based on, e.g., an identifier arrangement on a game interface screen that the second electronic device 120 outputs through the display. In this case, the arrangement of the function-related identifiers displayed on the game screen 920 by the first electronic device 110 according to the second layout 921 is substantially the same as the arrangement of the identifiers displayed on the game interface screen in the second electronic device 120. In this case, the user (e.g., the game player) may identify the function mapped for each function button by the game screen being output by the first electronic device 110.

FIG. 7F is a view illustrating an example of configuring a game interface screen of an input device (e.g., the second electronic device 120 of FIG. 1) in a game system (e.g., the game system 10 of FIG. 1) according to one or more embodiments.

Referring to FIG. 7F, a first electronic device 110 (e.g., the first electronic device 110 of FIG. 1) is operable to change a game screen in response to a user request. For example, if a request 961 for providing a manipulation guide is received from the user in a game state in which the game screen 940 is output, the first electronic device 110 is operable to output a multi-view screen 950 including a game screen 951 and a screen 953 displaying the manipulation guide 965 through the display 520. A manipulation guide providing request 961 is generated by touching the function identifier 931 included in the game interface screen 930 being output by the input device 120.

According to an embodiment, the first electronic device 110 is operable to decrease the display area of the game screen on the display 520 from the entire area 940 to the partial area 951. The first electronic device 110 is operable to output the screen 953 for displaying the manipulation guide in an area acquired from decreasing the display area which used to display the game screen. The screen 953 displaying the manipulation guide is a virtual game pad screen including function information corresponding to each of the function buttons to be used to play the corresponding game. For example, if the user requests to terminate the output of the manipulation guide in a game state where the multi-view screen 950 is being output, the first electronic device 110 is operable to stop the output of the multi-view screen 950 and may extend (or expand) the display area of the game screen to the entire area 940 of the display.

A method for playing a game on an electronic device 110, according to an embodiment of the disclosure, comprises determining (311) a function identifier to be mapped to function buttons to be included in a game interface screen of an input device 120. A method for playing a game on an electronic device 110, according to an example, comprises transmitting (311, 319), to the input device 120, first mapping information including a button identifier for identifying the function buttons and information regarding the function identifier determined to be mapped to the function buttons.

As an example, the method for playing the game on the electronic device 110 may comprise displaying (720) the function identifier and the button identifier for identifying the function button mapped with the function identifier, in a partial area of a game screen displayed on a display 520.

As an example, the method for playing the game on the electronic device 110 may comprise, in response to connection with the input device 120, determining a type of a game interface to be displayed on a display 620 of the input device 120. As an example, the method for playing the game on the electronic device 110 may comprise obtaining the button identifier for identifying the function buttons to be included in the game interface corresponding to the determined game interface type.

As an example, in the method for playing the game on the electronic device 110, determining the function identifier may include identifying function icons on a game screen displayed on a display 520. As an example, the method for playing the game on the electronic device 110 may comprise determining the identified function icons as the function identifier.

As an example, the method for playing the game on the electronic device 110 may comprise displaying, on a display 520, a virtual gamepad screen including function information corresponding to the function buttons to be used in a specific game. As an example, the method for playing the game on the electronic device 110 may comprise obtaining function information mapped corresponding to the function buttons on the virtual gamepad screen. As an example, the method for playing the game on the electronic device 110 may comprise, in response to the specific game being executed, transmitting, to the input device 120, second mapping information including the button identifier for identifying the function buttons and function information mapped for each of the function buttons.

As an example, the method for playing the game on the electronic device 110 may comprise displaying, on a display 520, a virtual gamepad screen including function information to be applied differently for each game state, corresponding to function buttons to be used in a specific game. As an example, the method for playing the game on the electronic device 110 may comprise obtaining the function information mapped differently for each game state, corresponding to the function buttons on the virtual gamepad screen. As an example, the method for playing the game on the electronic device 110 may comprise, in response to the specific game being executed, transmitting, to the input device 120, third mapping information including the button identifier for identifying the function buttons and first function information mapped for each of the function buttons to play in a first game state. As an example, the method for playing the game on the electronic device 110 may comprise, if a mapping information change event occurs as a play game state of the specific game changes from the first game state to a second game state, transmitting, to the input device 120, fourth mapping information including the button identifier for identifying the function buttons and second function information mapped for each of the function buttons to play in the second game state.

As an example, the method for playing the game on the electronic device 110 may comprise, in response to connection with the input device, determining a type of a game interface to be displayed on a display of the input device. As an example, the method for playing the game on the electronic device 110 may comprise displaying the function identifiers according to a button layout of a gamepad corresponding to the determined game interface type, on a game screen displayed on a display.

As an example, the method for playing the game on the electronic device 110 may comprise, in response to a guide display request, decreasing a display area where a game screen is to be output on a display, and outputting a virtual gamepad screen including function information corresponding to function buttons to be used to play a corresponding game in an area acquired on the display as the display area is decreased.

An electronic device 110, according to an example of the disclosure, may comprise a display 520 displaying a game screen. The electronic device 110 according to an example may comprise a transceiver 540 performing communication with an input device 120 based on a specific communication scheme. The electronic device 110 according to an example may comprise memory 550 storing instructions for playing a game. The electronic device 110 according to an example may comprise at least one processor 510 including a processing circuit electrically connected with the display 520, the transceiver 540, and the memory 550 to perform control for playing the game. As an example, the instructions, when executed, may enable the at least one processor 510 to individually and/or collectively determine function identifiers to be mapped to function buttons included in a game interface screen of the input device 120. As an example, the instructions, when executed, may enable the at least one processor 510 to individually and/or collectively transmit first mapping information defining a mapping relationship between the function buttons and the function identifiers to the input device 120 through the transceiver 540. As an example, the first mapping information may include a button identifier for identifying the function buttons and information regarding a button the function identifier determined to be mapped for each of the function buttons.

As an example, the instructions, when executed, may enable the at least one processor 510 to individually and/or collectively display the function identifier and the button identifier for identifying the function button mapped to the function identifier, in a partial area of the game screen displayed on the display 520.

As an example, the instructions, when executed, may enable the at least one processor 510 to individually and/or collectively, in response to connection with the input device 120, determine a type of a game interface to be displayed on a display 620 of the input device 120. As an example, the instructions, when executed, may enable the at least one processor 510 to individually and/or collectively obtain the button identifier for identifying the function buttons to be included in the game interface corresponding to the determined game interface type.

As an example, the instructions, when executed, may enable the at least one processor 510 to individually and/or collectively identify function icons on the game screen displayed on the display 520. As an example, the instructions, when executed, may enable the at least one processor 510 to individually and/or collectively determine the identified function icons as the function identifier.

As an example, the instructions, if executed, may enable the at least one processor 510 to individually and/or collectively display, on the display 520, a virtual gamepad screen including function information corresponding to function buttons to be used in a specific game. As an example, the instructions, if executed, may enable the at least one processor 510 to individually and/or collectively obtain function information mapped corresponding to the function buttons on the virtual gamepad screen. As an example, the instructions, if executed, may enable the at least one processor 510 to individually and/or collectively, in response to the specific game being executed, transmit second mapping information defining a mapping relationship between the function buttons and the function information to the input device 120 through the transceiver 540. As an example, the second mapping information may include the button identifier for identifying the function buttons and the function information mapped for each of the function buttons.

As an example, the instructions, if executed, may enable the at least one processor 510 to individually and/or collectively display, on the display 520, a virtual gamepad screen including function information to be applied differently for each game state, corresponding to function buttons to be used in a specific game. As an example, the instructions, if executed, may enable the at least one processor 510 to individually and/or collectively obtain the function information mapped differently for each game state, corresponding to the function buttons on the virtual gamepad screen. As an example, the instructions, if executed, may enable the at least one processor 510 to individually and/or collectively, in response to the specific game being executed, transmit third mapping information defining a mapping relationship between the function buttons and first function information to play in a first game state, to the input device 120 through the transceiver 540. As an example, the instructions, if executed, may enable the at least one processor 510 to individually and/or collectively, if a mapping information change event occurs as a play game state of the specific game changes from the first game state to a second game state, transmit fourth mapping information defining a mapping relationship between the function buttons and second function information to play in the second game state, to the input device 120 through the transceiver 540. As an example, the third mapping information may include a target button identifier for identifying the function buttons and the first function information mapped for each of the function buttons to play in the first game state. As an example, the fourth mapping information may include the button identifier for identifying the function buttons and the second function information mapped for each of the function buttons to play in the second game state.

As an example, the instructions, if executed, may enable the at least one processor 510 to individually and/or collectively, in response to connection with the input device 120, determine a type of a game interface to be displayed on a display 620 of the input device 120. As an example, the instructions, if executed, may enable the at least one processor 510 to individually and/or collectively display function identifiers according to a button layout of a gamepad corresponding to the determined game interface type, on the game screen.

As an example, the instructions, if executed, may enable the at least one processor 510 to individually and/or collectively in response to a guide display request, decrease a display area where a game screen is to be output on the display 520. As an example, the instructions, if executed, may enable the at least one processor 510 to individually and/or collectively output a virtual gamepad screen including function information corresponding to function buttons to be used to play a corresponding game in an area acquired on the display 520 as the display area is decreased.

A method for providing a game interface in an input device 120, according to an embodiment of the disclosure, comprises receiving, from an electronic device 110, first mapping information defining a mapping relationship between function buttons and function information. According to an example, the method for providing the game interface in the input device 120 may comprise a button identifier for identifying the function buttons and the function information determined to be mapped for each of the function buttons, from the first mapping information. According to an example, the method for providing the game interface in the input device 120 comprise displaying identification information about a function mapped corresponding to the function buttons included in a game interface screen using the button identifier and the function information.

As an example, in the method for providing the game interface in the input device 120, displaying the identification information about the mapped function may include displaying at least one of text or an icon for identifying the mapped function corresponding to the function buttons included in the game interface screen using the function information and the button identifier.

As an example, the method for providing the game interface in the input device 120 may comprise, in response to a game state of a game being played changing from a first game state to a second game state, receiving, from a second electronic device, second mapping information defining a mapping relationship between the function buttons and a function to play in the second game state. As an example, the method for providing the game interface in the input device 120 may comprise obtaining function information mapped for each of the function buttons in the second game state and the button identifier for identifying the function buttons, from the second mapping information. As an example, the method for providing the game interface in the input device 120 may comprise changing identification information about a function displayed corresponding to the function buttons included in a game interface screen using the button identifier and the function information.

An electronic device 120, according to an example of the disclosure, may comprise a display 620 displaying a game interface screen. According to an example, the input device 120 may comprise a touch panel 630 detecting a touch input for a touch interaction. According to an example, the input device 120 according to an example may comprise a transceiver 640 performing communication with an electronic device 110 based on a specific communication scheme. The input device 120 according to an example may comprise memory 650 storing instructions for playing a game. According to an example, the input device 120 may comprise at least one processor (610) including a processing circuit electrically connected with the display 620, the touch panel 630, the transceiver 640, and the memory 650 to perform control for controlling play of the game. As an example, the instructions, when executed, may enable the at least one processor 610 to individually and/or collectively receive, from the electronic device 110, first mapping information defining a mapping relationship between the function buttons and function information, through the transceiver 640. As an example, the instructions, when executed, may enable the at least one processor 610 to individually and/or collectively obtain a button identifier for identifying the function buttons and the function information determined to be mapped for each of the function buttons, from the first mapping information. As an example, the instructions, if executed, may enable the at least one processor 610 to individually and/or collectively display identification information about a target function mapped corresponding to the function buttons included in the game interface screen using the function information and the button identifier.

As an example, the instructions, if executed, may enable the at least one processor 610 to individually and/or collectively display at least one of text or an icon for identifying a function mapped corresponding to the function buttons included in the game interface screen using the function information and the button identifier.

As an example, the instructions, if executed, may enable the at least one processor 610 to individually and/or collectively, in response to a state of a game being played changing from a first game state to a second game state, receive, from the electronic device 110 through the transceiver 640, second mapping information defining a relationship between the function buttons and a function to play in the second game state. As an example, the instructions, if executed, may enable the at least one processor 610 to individually and/or collectively obtain function information mapped for each of the function buttons in the second game state, and the button identifier for identifying the function buttons from the second mapping information. As an example, the instructions, if executed, may enable the at least one processor 610 to individually and/or collectively change identification information about a target function displayed corresponding to the function buttons included in the game interface screen using the function information and the button identifier.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

The term "game state" used herein refers to, but not limited to, the current snapshot, including the game at a specific moment, or "state" of a game and all the relevant information and data that pertains to it, including status, location, and direction of objects, characters, and environments as well as mission and progress states.

In the disclosure, the above-described description has been made mainly of specific embodiments, but the disclosure is not limited to such specific embodiments but should rather be appreciated as covering all various modifications, equivalents, and/or substitutes of various embodiments.

## Claims

1. A method for playing a game on an electronic device (110), the method comprising:
determining (311) a function identifier to be mapped to function buttons to be included in a game interface screen of an input device (120); and
transmitting (311, 319), to the input device (120), first mapping information including a button identifier for identifying the function buttons and information regarding the function identifier determined to be mapped to the function buttons.

2. The method of claim 1, further comprising displaying (720) the function identifier and the button identifier for identifying the function button mapped with the function identifier, in a partial area of a game screen displayed on a display (520).

3. The method of claim 1 or 2, further comprising:
in response to connection with the input device (120), determining a type of a game interface to be displayed on a display (620) of the input device (120); and
obtaining the button identifier for identifying the function buttons to be included in the game interface screen corresponding to the determined game interface type.

4. The method of any one of claims 1 to 3, wherein determining the function identifier includes:
identifying function icons on a game screen displayed on a display (520); and
determining the identified function icons as the function identifier.

5. The method of any one of claims 1 to 4, further comprising:
displaying, on a display (520), a virtual gamepad screen including function information corresponding to the function buttons to be used in a specific game;
obtaining function information mapped corresponding to the function buttons on the virtual gamepad screen; and
in response to the specific game being executed, transmitting, to the input device (120), second mapping information including the button identifier for identifying the function buttons and function information mapped for each of the function buttons.

6. The method of any one of claims 1 to 4, further comprising:
displaying, on a display (520), a virtual gamepad screen including function information to be applied differently for each state, corresponding to function buttons to be used in a specific game;
obtaining the function information mapped differently for each state, corresponding to the function buttons on the virtual gamepad screen;
in response to the specific game being executed, transmitting, to the input device (120), third mapping information including the button identifier for identifying the function buttons and first function information mapped for each of the function buttons to play in a first state; and
when a mapping information change event occurs as a play state of the specific game changes from the first state to a second state, transmitting, to the input device (120), fourth mapping information including the button identifier for identifying the function buttons and second function information mapped for each of the function buttons to play in the second state.

7. The method of any one of claims 1 to 6, further comprising:
in response to connection with the input device, determining a type of a game interface to be displayed on a display of the input device; and
displaying the function identifiers according to a button layout of a gamepad corresponding to the determined game interface type, on a game screen displayed on a display.

8. The method of any one of claims 1 to 4, further comprising, in response to a guide display request, decreasing a display area where a game screen is to be output on a display, and outputting a virtual gamepad screen including function information corresponding to function buttons to be used to play a corresponding game in an area acquired as the display area is decreased.

9. An electronic device (110), comprising:
a display (520) displaying a game screen;
a transceiver (540) performing communication with an input device (120) based on a specific communication scheme;
a memory (550) storing instructions for playing a game; and
at least one processor (510) including a processing circuit electrically connected with the display (520), the transceiver (540), and the memory (550) to perform control for playing the game, wherein the instructions, when executed, enable the at least one processor (510) to individually and/or collectively:
determine function identifiers to be mapped to function buttons included in a game interface screen of the input device (120); and
transmit first mapping information defining a mapping relationship between the function buttons and the function identifiers to the input device (120) through the transceiver (540),
wherein the first mapping information includes a button identifier for identifying the function buttons and information regarding a button the function identifier determined to be mapped for each of the function buttons.

10. The electronic device (110) of claim 9, wherein the instructions, when executed, enable the at least one processor (510) to individually and/or collectively display the function identifier and the button identifier for identifying the function button mapped to the function identifier, in a partial area of the game screen displayed on the display (520).

11. The electronic device (110) of claim 9 or 10, wherein the instructions, when executed, enable the at least one processor (510) to individually and/or collectively:
in response to connection with the input device (120), determine a type of a game interface to be displayed on a display (620) of the input device (120);
obtain the button identifier for identifying the function buttons to be included in the game interface screen corresponding to the determined game interface type;
identify function icons on the game screen displayed on the display (520); and
determine the identified function icons as the function identifier.

12. The electronic device (110) of any one of claims 9 to 11, wherein the instructions, when executed, enable the at least one processor (510) to individually and/or collectively:
display, on the display (520), a virtual gamepad screen including function information corresponding to function buttons to be used in a specific game;
obtain function information mapped corresponding to the function buttons on the virtual gamepad screen; and
in response to the specific game being executed, transmit second mapping information defining a mapping relationship between the function buttons and the function information to the input device (120) through the transceiver (540),
wherein the second mapping information includes the button identifier for identifying the function buttons and the function information mapped for each of the function buttons.

13. The electronic device (110) of any one of claims 9 to 11, wherein the instructions, when executed, enable the at least one processor (510) to individually and/or collectively:
display, on the display (520), a virtual gamepad screen including function information to be applied differently for each state, corresponding to function buttons to be used in a specific game;
obtain the function information mapped differently for each state, corresponding to the function buttons on the virtual gamepad screen;
in response to the specific game being executed, transmit third mapping information defining a mapping relationship between the function buttons and first function information to play in a first state, to the input device (120) through the transceiver (540); and
when a mapping information change event occurs as a play state of the specific game changes from the first state to a second state, transmit fourth mapping information defining a mapping relationship between the function buttons and second function information to play in the second state, to the input device (120) through the transceiver (540),
wherein the third mapping information includes a target button identifier for identifying the function buttons and the first function information mapped for each of the function buttons to play in the first state, and
wherein the fourth mapping information includes the button identifier for identifying the function buttons and the second function information mapped for each of the function buttons to play in the second state.

14. The electronic device (110) of any one of claims 9 to 13, wherein the instructions, when executed, enable the at least one processor (510) to individually and/or collectively:
in response to connection with the input device (120), determine a type of a game interface to be displayed on a display (620) of the input device (120); and
display function identifiers according to a button layout of a gamepad corresponding to the determined game interface type, on the game screen.

15. The electronic device (110) of any one of claims 9 to 11, wherein the instructions, when executed, enable the at least one processor (510) to individually and/or collectively, in response to a guide display request, decrease a display area where a game screen is to be output on the display (520), and output a virtual gamepad screen including function information corresponding to function buttons to be used to play a corresponding game in an area acquired on the display (520) as the display area is decreased.
